# FASCICULE DE BREVET EUROPEEN

(11) **EP 0 964 235 B1**
(45) Date de publication et mention de la délivrance du brevet: **02.01.2002**
(21) Numéro de dépôt: 99401297.9
(22) Date de dépôt: 31.05.1999
(51) Int. Cl.: G01M 3/28

(54) **Détecteur de fuites de fluide**
Leckdetector für Flüssigkeiten
Fluid leak detector

(30) Priorité: 11.06.1998 FR 9807405
(43) Date de publication de la demande: 15.12.1999
(73) Titulaire: Croibier, Denis, 28270 Bérou-la-Mulotière (FR)
(72) Inventeur: Croibier, Denis, 28270 Bérou-La-Mulotière (FR)
(74) Mandataire: Lapoux, Roland

(56) Documents cités:
- WO-A-97/12215
- US-A- 5 503 175

## Description

La présente invention concerne un détecteur de fuites inséré dans une veine fluide, telle qu'une canalisation de liquide ou de gaz, pour détecter une fuite dans la canalisation en aval du détecteur. En particulier, la fuite peut être une "microfuite" à travers laquelle le fluide s'écoule avec un débit très faible comparativement au débit du fluide en fonctionnement normal de la canalisation.

Traditionnellement, les détecteurs d'écoulement et de débit, dits également débitmètres, fournissent une information liée à la vitesse d'écoulement du fluide. Pour la mesure de la vitesse d'écoulement peuvent être utilisés des turbines, des volets, des flotteurs, des billes, des sondes ultrasonores, des sondes thermiques, etc. Tous ces appareils ne mesurent pas de très faibles vitesses d'écoulement. Ils sont insensibles aux très faibles débits, d'autant plus que le diamètre de la conduite concernée est grand.

L'objectif principal de l'invention est de remédier à ces inconvénients en fournissant un détecteur de fuites dans lequel la détection de fuites n'est pas directement liée à la vitesse d'écoulement, mais est liée à de petits volumes de fluide qui s'échappent par au moins une fuite en aval du détecteur.

A cette fin, un détecteur de fuites selon l'invention comprend
un obturateur disposé entre un conduit d'entrée de fluide et un conduit de sortie de fluide et en position d'ouverture tant que le fluide dans les conduits d'entrée et de sortie exerce une pression différentielle sur l'obturateur supérieure à une première pression,
un moyen de détection de fuites disposé sensiblement au centre de l'obturateur et déplaçable entre les conduits d'entrée et de sortie lorsque la pression différentielle varie entre une deuxième pression inférieure à la première pression et la première pression et l'obturateur demeure à une position de fermeture, et
un moyen de transfert de fluide commandé par le moyen de détection de fuites pour passer du fluide du conduit d'entrée au conduit de sortie dès que la pression différentielle devient sensiblement supérieure à la deuxième pression.

La première pression correspond à une pression d'ouverture d'un clapet obstruant une canalisation et est donc élevée, le clapet pouvant être ouvert et fermé très fréquemment. Lorsque la pression différentielle est supérieure à la première pression, l'obturateur est en position d'ouverture pour un débit normal à travers les conduits d'entrée et de sortie, suite par exemple à l'ouverture normale d'un robinet dans la canalisation en aval du détecteur de fuites.

La deuxième pression correspond à une faible dépression de quelques millibars créée derrière l'obturateur dans le conduit de sortie, par l'échappement d'un petit volume de fluide, typiquement de quelques dizaines de microlitres pour un liquide, par exemple à travers une fissure de la canalisation en aval du détecteur de fuites. Comme on le verra dans la description détaillée, un tel petit volume de fluide échappé fait déplacer cycliquement le moyen de détection de fuites pour que le moyen de transfert de fluide comble ce petit volume avec du fluide du conduit d'entrée. Ce moyen de transfert de fluide peut signaler cette perte de fluide par le clignotement d'un voyant de contrôle, tant que le débit de la fuite est inférieur à un débit prédéterminé à travers un canal calibré dans le moyen de transfert de fluide.

La sensibilité du détecteur de fuites de l'invention ne dépend pas de la vitesse d'écoulement à travers la fente qui peut être plus ou moins élevée, ni du diamètre des conduits d'entrée et de sortie et donc du diamètre de la canalisation. La sensibilité dépend d'un petit volume de fluide échappé qui est défini par construction du détecteur de fuites et qui est fonction de l'effort à exercer par la pression différentielle sur le moyen de détection de fuites pour que celui-ci se déplace et commande le moyen de transfert de fluide. Toutefois, le détecteur de fuites ne mesure pas de pression, mais peut être utilisé pour mesurer des débits très faibles puisqu'il suffit de mesurer la durée du cycle pour que ledit petit volume de fluide s'échappe et soit comblé, et de connaître ledit petit volume de fluide.

Selon une première réalisation de l'invention, l'obturateur comprend un corps monolithique en matière élastique ayant une portion annulaire et une portion centrale. La portion annulaire remplit le rôle de clapet et a une première raideur pour qu'à la position de fermeture de l'obturateur, la portion annulaire soit appliquée hermétiquement contre un siège en direction du conduit d'entrée tant que la pression différentielle est inférieure à la première pression. Le moyen de détection de fuites comporte la portion centrale de l'obturateur au centre de la portion annulaire. La portion centrale joue le rôle de membrane et a une deuxième raideur qui est inférieure à la première raideur afin que la portion centrale se déforme lorsque la pression différentielle devient supérieure à la deuxième pression. Le moyen de détection de fuites comporte également un capteur de déplacement supporté au moins partiellement par la portion centrale de la membrane et détectant des déplacements de la portion centrale pour commander le moyen de transfert de fluide. Dans cette première réalisation, les déplacements de la portion centrale plus flexible que la portion annulaire sont liés à des déformations de la portion centrale agissant comme une membrane. La grandeur dudit petit volume de fluide échappé est liée aux contraintes de déformation de la portion centrale déterminant ladite deuxième pression.

Le corps monolithique de l'obturateur peut être maintenu dans le corps du détecteur de fuites par sa périphérie formant un joint serré entre deux parties du corps du dispositif.

La portion annulaire peut comporter des lumières de passage de fluide, de préférence ayant une surface totale sensiblement égale à la section des conduits d'entrée et de sortie. Dans ces conditions, lorsque l'obturateur est en position d'ouverture suite à l'ouverture normale d'un robinet en aval du détecteur de fuites, le détecteur de fuites ne modifie quasiment pas l'écoulement normal du fluide.

Selon une deuxième réalisation de l'invention, l'élasticité de la portion annulaire dans la première réalisation est remplacée par l'élasticité d'un ressort de compression. Ainsi, dans la deuxième réalisation, l'obturateur comprend un corps monolithique en matière élastique ayant une portion annulaire qui à la position de fermeture reste appliquée hermétiquement contre un siège en direction du conduit d'entrée par un ressort de compression ayant une première raideur tant que la pression différentielle est inférieure à la première pression, et le moyen de détection de fuites comporte une portion centrale de l'obturateur au centre de la portion annulaire, avec une deuxième raideur qui est inférieure à la première raideur afin que la portion centrale se déforme lorsque la pression différentielle devient supérieure à la deuxième pression, et un capteur de déplacement supporté au moins partiellement par la portion centrale et détectant des déplacements de la portion centrale pour commander le moyen de transfert de fluide.

Cette deuxième réalisation est particulièrement bien adaptée lorsque le corps du détecteur de fuites a un profil longitudinal en T, avec un siège d'obturateur longitudinal en vis-à-vis d'un chapeau latéral.

Dans les première et deuxième réalisations, la portion centrale de l'obturateur peut être moins épaisse que la portion annulaire de l'obturateur afin que la raideur de la portion annulaire soit nettement plus grande que celle de la portion centrale.

Typiquement, la portion centrale de l'obturateur a sensiblement une forme conique, c'est-à-dire par exemple une forme tronconique ou parabolique, convergeant vers le conduit d'entrée dans un état déchargé lorsque la pression différentielle est inférieure à la deuxième pression et une forme conique convergeant vers le conduit de sortie dans un état chargé lorsque la pression différentielle est nettement supérieure à la deuxième pression. La portion annulaire a une section épaisse radiale en V avec un sommet coopérant avec le siège.

Selon une troisième réalisation de l'invention, les portions annulaire et centrale d'obturateur élastique sont remplacées par des ensembles chacun à piston et ressort de rappel vers l'amont. Ainsi l'obturateur comprend un premier piston annulaire monté à coulissement axial sensiblement dans les conduits d'entrée et de sortie, et un premier ressort avec une première raideur pour qu'à la position de fermeture, le premier piston soit appliqué hermétiquement contre un siège en direction du conduit d'entrée tant que la pression différentielle est inférieure à la première pression. Le moyen de détection de fuites comporte un deuxième piston monté à coulissement hermétique relativement au premier piston, et un deuxième ressort avec une deuxième raideur qui est inférieure à la première raideur afin que le deuxième piston se déplace lorsque la pression différentielle devient supérieure à la deuxième pression, et un capteur de déplacement supporté au moins partiellement par le deuxième piston et détectant des déplacements du deuxième piston pour commander le moyen de transfert de fluide.

Selon une première variante de la troisième réalisation, le deuxième piston est monté à coulissement dans le premier piston, lequel entoure partiellement le deuxième ressort et est entouré partiellement par le premier ressort.

De manière équivalente aux lumières ménagées dans la portion annulaire de l'obturateur monolithique élastique selon la première réalisation, un guide fixé au conduit de sortie et dans lequel le premier piston est monté à coulissement comporte des lumières de passage de fluide, de préférence ayant une surface totale sensiblement égale à la section des conduits d'entrée et de sortie.

Selon une deuxième variante de la troisième réalisation offrant une plus grande sensibilité aux petites fuites que la première variante, le premier piston est monté à coulissement dans le deuxième piston, lequel est entouré partiellement par les deuxième et premier ressorts.

Le capteur de déplacement du moyen de détection de fuites peut être réalisé de différentes façons.

Selon une première variante, le moyen de détection de fuites comprend un aimant supporté par une portion centrale déplaçable de l'obturateur et un contact d'interrupteur électrique suspendu dans le conduit de sortie pour relier un moyen d'alimentation électrique au moyen de transfert de fluide lorsque l'aimant est proche du contact d'interrupteur électrique.

Selon une deuxième variante, l'aimant est remplacé par une pièce métallique, et le contact d'interrupteur électrique est remplacé par un détecteur de proximité inductif.

Selon une troisième variante, le moyen de détection comprend un pont de jauges de contrainte supporté par une portion centrale déformable de l'obturateur. Lorsque la pression différentielle est supérieure à la deuxième pression, le pont de jauges de contrainte est déséquilibré pour relier un moyen d'alimentation électrique au moyen de transfert de fluide.

Le moyen de transfert de fluide sert à combler cycliquement ledit petit volume de fluide échappé par une fente. Il peut comprendre un canal de dérivation calibré entre le conduit d'entrée et le conduit de sortie et contournant l'obturateur, et un moyen, tel qu'électrovanne, pour ouvrir le canal de dérivation calibré seulement lorsque la pression différentielle est au moins supérieure à la deuxième pression.

Le moyen pour ouvrir peut comprendre un moyen, tel qu'une électrovanne proportionnelle, pour faire varier la section du canal de dérivation dans l'électrovanne et ainsi la durée d'un cycle de remplissage de petit volume de fluide échappé. Grâce au passage d'un signal intermittent à un signal continu produit par un voyant de contrôle, ou autre moyen de signalisation similaire, lorsque le débit à travers l'électrovanne proportionnelle est sensiblement égal à celui de la fuite détectée, c'est-à-dire grâce au signalement du passage de la pression différentielle par la première pression provoquant le passage de l'obturateur de la position fermée à la position ouverte, ou inversement, le détecteur de fuites selon l'invention peut servir de débitmètre de fuites.

Le moyen de transfert de fluide peut comprendre un deuxième canal de dérivation muni d'un clapet antiretour qui s'ouvre pour un écoulement de fluide depuis le conduit de sortie vers le conduit d'entrée. L'ouverture du clapet antiretour facilite le rééquilibrage des pressions sur les faces de l'obturateur lors d'une vidange de fluide en aval du détecteur de fuites par exemple.

Le détecteur de fuites peut comprendre un circuit de surveillance des fuites pour signaler une fuite lorsque le volume de fluide échappé par celle-ci atteint un seuil prédéterminé, c'est-à-dire lorsque le nombre de petits volumes de fluide échappé est relativement grand pendant une durée prédéterminée. Par ce biais, le débit de fluide échappé par la fuite peut être mesuré.

Ainsi, il est prévu un moyen pour signaler des franchissements cycliques de la deuxième pression par la pression différentielle sous la forme d'un signal discontinu, et un franchissement de la première pression par la pression différentielle sous la forme d'un signal continu.

De préférence, il est également prévu un moyen relié au moyen de transfert de fluide pour compter un franchissement de deuxième pression chaque fois que la pression différentielle devient sensiblement supérieure à la deuxième pression et reste supérieure à celle-ci pendant au plus une durée prédéterminée, et un moyen pour émettre une alarme lorsque la durée totale des franchissements de deuxième pression successifs comptés est sensiblement égale à une durée prédéterminée.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme schématique montrant un détecteur de fuites de fluide selon l'invention installé à l'entrée d'un réseau de distribution de fluide domestique ;
- la figure 2 est une vue en coupe longitudinale du corps d'un détecteur de fuites selon une première réalisation de l'invention, équipé d'un obturateur complètement en élastomère avec siège transversal, d'une électrovanne et d'un circuit de surveillance de fuites ;
- la figure 3 est une vue en coupe prise le long de la ligne brisée III-III de la figure 4, de l'obturateur en élastomère inclus dans le détecteur de fuites selon la première réalisation, à une position de repos en traits pleins et partiellement à des positions de travail en traits pointillés ;
- la figure 4 est une vue de face aval de l'obturateur élastique montré à la figure 3 ;
- la figure 5 est une vue en coupe longitudinale du corps d'un détecteur de fuites selon une deuxième réalisation de l'invention, équipé d'une électrovanne, et comprenant un siège longitudinal et un obturateur en élastomère à portion de clapet soumise à un ressort selon une première variante à droite d'un axe transversal, ou un obturateur en élastomère à portion de clapet avec une portion périphérique de joint selon une deuxième variante à gauche de l'axe transversal ;
- la figure 6 est une vue en coupe longitudinale d'un détecteur de fuites à deux pistons et deux ressorts selon une troisième réalisation de l'invention ; et
- la figure 7 est une vue en coupe longitudinale d'un détecteur de fuites à deux pistons et deux ressorts selon une variante de la troisième réalisation de l'invention.

Selon une utilisation préférée du détecteur de fuites 1 selon l'invention, celui-ci est introduit dans une conduite d'alimentation CA d'un réseau de distribution de fluide domestique RD, le fluide étant de l'eau par exemple. Toutefois, le fluide peut être un autre liquide ou du gaz, et le réseau de distribution peut être industriel.

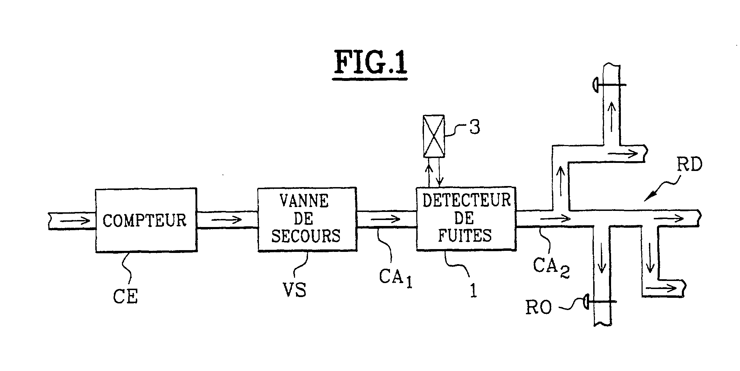

Comme montré à la figure 1, le détecteur de fuites 1 est raccordé à une portion amont CA₁ de la conduite d'alimentation en eau CA dans laquelle se trouve un compteur d'eau CE suivi d'une électrovanne ou d'une vanne manuelle de secours VS, et à une portion aval CA₂ desservant le réseau de distribution d'eau RD. Comme on le verra dans la suite, le détecteur de fuites 1 laisse passer normalement l'eau dans le réseau de distribution RD lors d'un usage normal des robinets et autres appareils inclus dans le réseau RD. En d'autres termes, la présence du détecteur de fuites 1 dans la conduite d'alimentation en eau CA ne modifie quasiment pas le débit requis dans le réseau de distribution d'eau RD si la conduite d'alimentation ne comprenait pas le détecteur de fuites 1.

Le détecteur de fuites 1 est destiné à détecter et signaler des microfuites dans le réseau de distribution d'eau domestique, tel qu'un "goutte à goutte" provenant d'un robinet mal fermé, d'un joint défectueux, d'une chasse d'eau mal réglée, d'une fêlure ou d'une soudure détériorée d'une conduite dans le réseau de distribution d'eau RD par exemple.

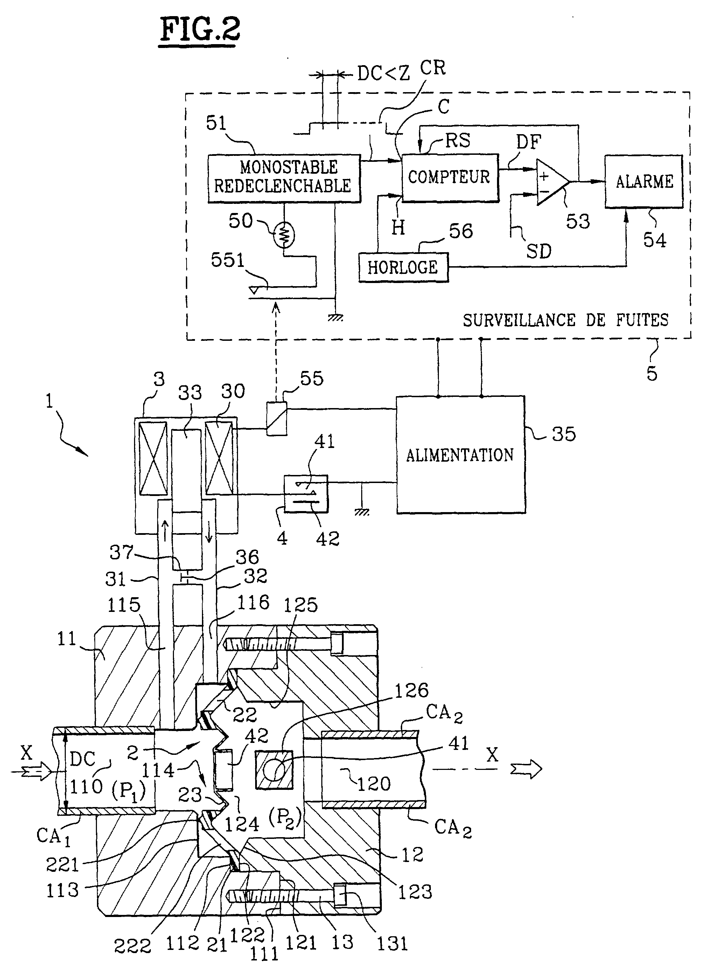

Le détecteur de fuites 1 selon une première réalisation montrée à la figure 2 présente un corps ayant une symétrie axiale par rapport à un axe longitudinal XX commun aux extrémités des portions amont et aval CA₁ et CA₂ de la conduite d'alimentation en eau, à l'exception de trous de raccordement d'électrovanne. Le détecteur de fuites 1 comprend essentiellement deux parties de corps cylindriques 11 et 12 pressées l'une contre l'autre par des vis d'assemblage longitudinal 13, un obturateur élastique 2 situé transversalement entre les deux parties de corps 11 et 12, une électrovanne 3 raccordée latéralement à la partie de corps amont 11, et un interrupteur 4. Par exemple, les éléments constituant le détecteur de fuites sont en matière plastique résistante, ou en alliage métallique léger et résistant.

La partie de corps amont 11 et la partie de corps aval 12 présentent respectivement un alésage d'entrée de fluide 110 et un alésage de sortie de fluide 120 à raccorder aux portions amont CA₁ et aval CA₂ de la conduite d'alimentation par filetages et joints selon la réalisation illustrée, ou par soudures par exemple. A partir de leur périphérie externe et de l'aval vers l'amont, des faces internes des parties de corps 11 et 12 présentent une demi-coupe en trois marches d'escalier ayant trois paires de surfaces en regard 111-121, 112-122 et 113-123.

Les premières surfaces diamétrales 111 et 121 situées à la périphérie externe des parties de corps 11 et 12 sont appliquées l'une contre l'autre par les vis d'assemblage 13 qui les traversent. La tête 131 de chaque vis 13 bute contre le fond d'un lamage ménagé dans la face aval de la partie de corps aval 12. La vis est vissée dans un trou longitudinal taraudé borgne dans la partie de corps amont 11.

Les surfaces diamétrales intermédiaires 112 et 122 pressent l'une contre l'autre une rondelle d'étanchéité formée par une portion périphérique plate 21 de l'obturateur élastique 2.

Les surfaces internes 113 et 123 délimitent respectivement une chambre d'entrée de fluide 114 qui est située en amont de l'obturateur 2 et dans laquelle débouche le conduit d'entrée 110, et une chambre de sortie de fluide 124 qui est située en aval de l'obturateur 2 et qui communique avec le conduit de sortie de fluide 120. Comme montré à la figure 2, l'obturateur 2 en position de repos est contenu dans le volume interne au détecteur compris entre les surfaces 113 et 122. La surface 113 constitue un siège transversal contre lequel s'appuie le sommet circulaire amont 221 d'un clapet annulaire à section radiale en V lorsqu'il est au repos. Le clapet est formé par une portion annulaire intermédiaire 23 de la membrane 2. La surface 113 est diamétrale, tandis que la surface 123 est sensiblement conique.

La surface 123 est suivie vers l'aval par un alésage cylindrique 125 qui prolonge la chambre de sortie 124 vers le conduit de sortie 120 et qui contient une colonne creuse 126 s'étendant perpendiculaire à l'axe XX. La colonne 126 traverse complètement diamétralement l'alésage 125, ou est une "demi-colonne" qui traverse partiellement l'alésage 125 sur une longueur sensiblement supérieure au rayon de l'alésage 125. Au milieu de la colonne 126 ou au fond d'un trou borgne de la demi-colonne est logée une ampoule de contact à fermeture 41 de type interrupteur à lames souples (ILS). Le contact 41 coopère avec un aimant permanent 42 fixé sur la face aval d'une membrane en cuvette tronconique formant une portion centrale 23 au centre de la portion annulaire 22 de l'obturateur 2. Le contact 41 et l'aimant permanent 42 constituent l'interrupteur de type magnétique 4 qui relie l'une des bornes de la bobine de l'électrovanne 3 à l'une des bornes d'une alimentation électrique 35. L'alimentation comprend par exemple une batterie rechargeable, ou un circuit redresseur, transformateur et de protection relié au secteur électrique pour fournir diverses tensions à l'électrovanne et à un circuit de surveillance de fuites.

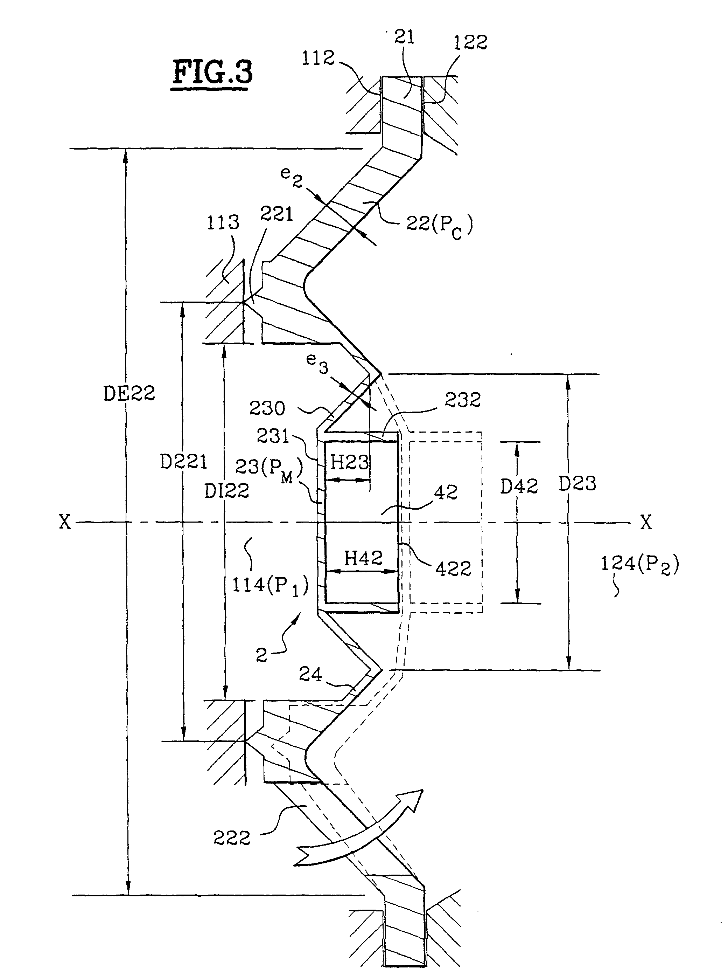

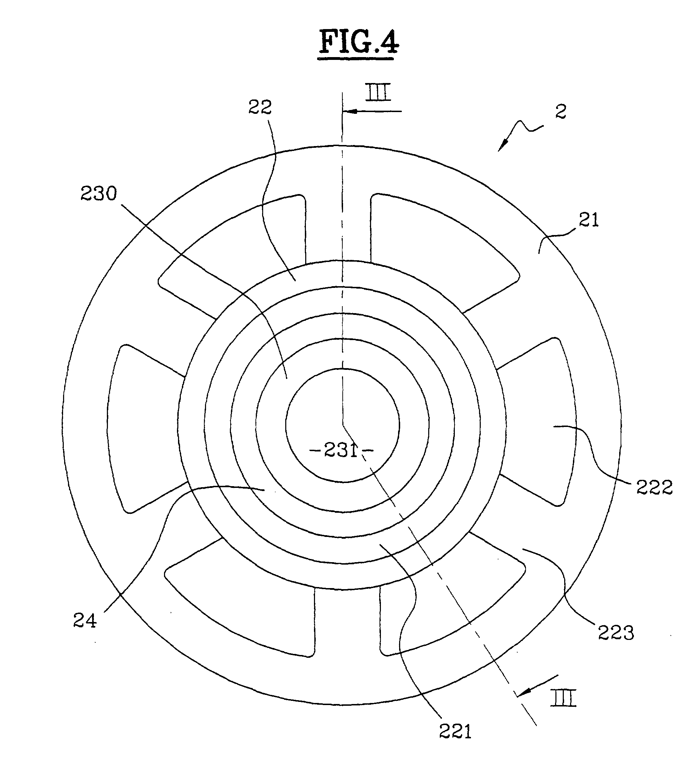

Comme montré aux figures 3 et 4, l'obturateur élastique 2 est une pièce monolithique moulée en un thermoplastique élastomère (TPE) et incluant principalement la portion périphérique 21 en rondelle d'étanchéité, la portion intermédiaire 22 en clapet annulaire à section radiale en V et la portion centrale 23 en membrane en cuvette.

Les portions annulaires 21 et 22 assument essentiellement des fonctions attribuées à un obturateur telles que l'étanchéité, le clapet et le maintien de débit, et la portion centrale assume la détection de fuites.

La fonction d'étanchéité est assurée grâce à la portion périphérique 21 en forme de rondelle d'étanchéité qui est pressée entre les surfaces d'appui diamétrales intermédiaires en regard 112 et 122 des parties de corps 11 et 12 par les vis 131 de manière à conférer une traversée étanche du fluide dans le détecteur de fuites par rapport à l'extérieur.

La fonction de clapet est assurée grâce à la portion intermédiaire annulaire 22 qui présente une flexibilité faible et donc une raideur relativement élevée R_{C}. De cette manière, lorsque l'obturateur est au repos, ou lorsque des microfuites sont détectées, le sommet circulaire de clapet 221 en forme de joint demi-torique est appliqué contre la surface de siège diamétrale 113 tant qu'une pression différentielle ΔP = P₁ - P₂ n'est pas supérieure à une première pression, dite pression d'ouverture de clapet P_{C}. P₁ et P₂ désignent des pressions exercées par le fluide respectivement dans la chambre amont 114 et la chambre aval 124 sur les faces de l'obturateur 2. Pour obtenir la pression d'ouverture de clapet élevée P_{C}, l'épaisseur e₂ de la portion intermédiaire 22 est relativement grande, typiquement de l'ordre de 2,5 mm pour un diamètre externe de portion annulaire DE22 = 52 mm et un diamètre D221 = 30 mm du sommet circulaire 221.

La fonction de maintien de débit est assurée grâce à des lumières de passage de fluide 222 pratiquées dans l'aile externe de la section radiale en V de la portion annulaire de clapet 22. Lorsque la portion de clapet 22 est décollée du siège 21 ce qui par conséquent fait communiquer la chambre amont 114 avec la chambre aval 124, le débit dans la conduite d'alimentation CA n'est quasiment pas altéré lors du passage du fluide de la portion de conduite CA₁ à la portion de conduite CA₂ à travers le détecteur de fuites. En effet, la somme des surfaces des lumières 222 projetées sur un plan diamétral est sensiblement égale à la section interne de diamètre DC de la conduite d'alimentation CA, afin d'éviter une perte de charge conséquente à travers le détecteur de fuites en fonctionnement normal du réseau de distribution RD. Les lumières 222 sont régulièrement réparties axialement entre des rayons plats rectangulaires 223 et ont un contour trapézoïdal dont les petite et grande bases sont concentriques et les côtés convergent sensiblement suivant des génératrices d'un cône ayant un sommet situé sur l'axe XX en amont de l'obturateur 2. Par exemple pour un diamètre DC de 24 mm sensiblement égal au diamètre interne DI22 de la portion 22, six lumières 222 sont régulièrement réparties dans la portion intermédiaire de clapet 22, avec une hauteur radiale H222 égale à 6,5 mm et une largeur moyenne L222 égale à 13 mm.

La fonction de détection de fuites est assurée grâce à la portion centrale 23 en forme de membrane en cuvette. La portion centrale 23 présente une épaisseur très faible e₃, typiquement de 0,4 à 0,5 mm et donc nettement inférieure à l'épaisseur e₂ de la portion annulaire de clapet 22, ce qui confère à la portion centrale 23 une flexibilité élevée et donc une raideur R_{M} nettement inférieure à la raideur R_{C} de la portion de clapet 22. La portion centrale 23 est déformée lorsque la pression différentielle ΔP est supérieure à une deuxième pression, dite pression de rappel membrane P_{M}, tout en étant inférieure à la pression d'ouverture de clapet P_{C}. Comme montré à la figure 3, le côté tronconique 230 de la portion centrale 23 et la portion annulaire 22 sont reliés par une portion de liaison tronconique mince 24 qui rend indépendantes les déformations de la portion centrale 23 et les déformations de la portion intermédiaire 22. Le fond 231 de la portion centrale en cuvette 23 orienté vers l'amont comporte sur sa face aval une paroi cylindrique 232 dans laquelle est encastré l'aimant permanent 42 sous la forme d'une pastille qui peut être collée au fond 231.

Au repos, grâce à la pression de rappel de membrane P_{M}, le fond de cuvette 231 de la portion centrale 23 est situé en amont de la portion de liaison 24. Lorsqu'une pression différentielle ΔP supérieure à la pression de rappel de membrane P_{M} déplace vers l'aval la portion centrale en cuvette 23, la portion en vé de la portion centrale de membrane 22 est comprimée, la face aval 422 de l'aimant 42 vient buter contre la face amont de la colonne 126 dans la partie de corps aval 12, et le fond de cuvette 231 vient sensiblement en aval de la portion de liaison 24. Typiquement, le diamètre externe D23 de la portion centrale 23 est égal à 20 mm, le diamètre D42 de l'aimant permanent 42 est égal à 10,5 mm, la hauteur H23 de la portion en cuvette 23 est de 4 mm, et la hauteur H42 de l'aimant est de 5 mm.

En référence de nouveau à la figure 2, l'électrovanne comprend un conduit d'entrée et un conduit de sortie partiellement sous la forme de tubes saillants filetés 31 et 32. Le tube 31 est vissé à l'extrémité taraudée d'un trou radial 115 débouchant dans le conduit d'entrée de fluide 110. Le tube 32 est vissé dans l'extrémité taraudée d'un trou radial 116 pratiqué également dans la partie de corps amont 11 et débouchant dans l'épaulement cylindrique entre les surfaces radiales 113 et 112, en amont des lumières 222 de la portion annulaire de clapet 22 de l'obturateur 2.

Au repos, lorsque l'aimant 42 est éloigné du contact 41 qui est ouvert, un obturateur 33 à aimantation permanente dans l'électrovanne 3 ferme un canal de dérivation entre le conduit d'entrée 31 et le conduit de sortie 32 de sorte qu'aucun fluide ne passe de la chambre amont 114 à la chambre aval 124 à travers l'électrovanne. Lorsque l'aimant 42 est rapproché suffisamment du contact 141 suspendu par la colonne 126 dans la chambre aval 124, ou bute contre la colonne 126, pour fermer le contact 41, l'électrovanne 3 est activée afin que l'obturateur 33 ouvre le canal de dérivation entre les trous 115 et 116.

Le canal de dérivation 115-116 a une section constante calibrée relativement petite, typiquement dans un rapport de 10 environ avec le diamètre DC de la conduite d'alimentation CA afin d'écouler une petite quantité de fluide de la chambre d'entrée 114 vers la chambre de sortie 124 à travers l'électrovanne, lorsque la portion annulaire de clapet 22 de l'obturateur 2 demeure appliquée contre le siège 113 et empêche toute communication directe de fluide entre les deux chambres.

Le débit à travers le canal de dérivation calibré 115-116 fonction de sa section est une limite prédéterminée entre deux types de fuites. Si la fuite est une "microfuite", c'est-à-dire est une fuite ayant un débit inférieur au débit prédéterminé du canal, le clapet 22-113 est fermé et la portion de membrane 23 oscille en amont de la colonne 126. Si la fuite est "plus importante", c'est-à-dire est une fuite ayant un débit supérieur au débit prédéterminé du canal, le clapet 22-113 est ouvert et la portion de membrane 23 est appliquée contre la colonne 126. Ces deux types de fonctionnement du détecteur de fuites selon l'invention sont détaillés ci-après.

Le fonctionnement du détecteur de fuites est décrit ci-après à partir d'un état fermé du circuit de distribution de fluide domestique RD, la conduite d'alimentation CA étant remplie de fluide, tel qu'eau, aussi bien dans la portion de conduite amont CA₁ que dans la portion de conduite aval CA₂. Le réseau de distribution RD ne présente aucune fuite, et par conséquent l'obturateur 2 obture le conduit central 110-120 et cloisonne les chambres 114 et 124. Les pressions exercées par le fluide dans les chambres 114 et 124 sur les faces amont et aval de l'obturateur sont égales. La portion de clapet 22 et la portion de membrane 23 sont à un état de repos. La portion annulaire de clapet est faiblement chargée pour s'appliquer contre le siège 113. La portion de membrane 23 a un profil tronconique convergeant vers l'axe XX en direction du conduit d'entrée 110. Le fond de cuvette 231 supportant l'aimant 42 est situé principalement à l'intérieur de la portion annulaire de clapet 22, et l'aimant est éloigné du contact 41, comme montré à la figure 2. Le contact 41 est ouvert et l'obturateur 33 dans l'électrovanne 3 est en position de repos et ferme le canal de dérivation 115-116 formé entre les deux chambres par les trous et tubes 115, 31, 32 et 116.

Si une microfuite ayant un débit inférieur au débit prédéterminé du canal de dérivation calibré 115-116 apparaît dans le réseau de distribution RD, un faible écoulement de fluide en aval du détecteur de fuites 1, depuis le conduit 120 et la portion de conduite CA₂, crée une dépression P₂ dans la chambre aval 124. La pression plus élevée P₁ dans la chambre amont 114 pousse lentement la portion centrale de membrane 23 au fur et à mesure de l'écoulement de fluide à travers la microfuite. La pression différentielle ΔP = P₁ - P₂ devient supérieure à la pression de rappel de membrane P_{M} de la portion de membrane 23 et ainsi rapproche l'aimant 42 de la colonne 126 dans la chambre 124. Lorsque l'aimant est suffisamment proche du contact 41, le contact 41 est fermé. La course aval de l'aimant entre sa position de repos amont et sa position maximale aval en butée contre la colonne 126 est de l'ordre de l'épaisseur de l'aimant 42, soit typiquement 5 à 6 mm. Comme montré en traits pointillés au-dessus de l'axe XX de l'obturateur 2 montré à la figure 3, le côté tronconique 230 de la portion de membrane 23 qui, au repos, convergeait vers l'amont de l'axe longitudinal XX, est comprimé, passe par une position diamétrale intermédiaire, et finalement est déformé en un tronc de cône ayant un angle au sommet sensiblement inférieur à 180° et convergeant vers l'aval de l'axe longitudinal XX. A cette position aval de charge quasi-maximale de la portion de membrane, l'aimant 42 bute contre la colonne 126.

L'électrovanne 3 est activée par la fermeture du contact 41 de l'interrupteur 4 et ouvre le canal de dérivation calibré entre les trous radiaux 115 et 116. Le canal calibré 115-116 met en communication la chambre amont 114 avec la chambre aval 124. La portion annulaire de clapet 22 demeure appliquée contre le siège 113, puisque la pression différentielle ΔP appliquée contre la face amont de l'obturateur 2 n'est pas suffisante pour lever la portion de clapet, c'est-à-dire est inférieure à la pression d'ouverture de clapet P_{C}. Le fluide de la chambre amont 114 s'écoule alors dans la chambre 124 de manière à combler le petit volume de fluide qui s'est échappé par la microfuite. La petite perte de charge ainsi créée par la microfuite est réduite au fur et à mesure que le fluide à travers le canal calibré 115-116 ayant un débit prédéterminé supérieur à celui de la microfuite comble la chambre aval 124 et remplit le trou radial aval 116 dans la portion de corps 11, et le tube aval de sortie 32 de l'électrovanne 3. La pression P₂ dans la chambre aval 124 augmente et par conséquent la pression différentielle ΔP = P₁ - P₂ exercée sur l'obturateur 2 diminue, jusqu'à atteindre la pression de rappel de membrane P_{M}. A ce stade, la portion centrale de membrane 23 se décharge et se déforme pour passer de la position montrée en traits pointillés au-dessus de l'axe XX à la figure 3 à la position de repos en amont montrée en traits pleins. Ce changement de position de la portion de membrane 23 créé par son élasticité propre chasse un faible volume de fluide de la chambre 114 vers la chambre 124 juste avant que l'électrovanne 3 ferme complètement le canal de dérivation calibré suite à la désactivation de l'électrovanne par l'ouverture du contact 41 qui devient éloigné de l'aimant 42.

De nouveau, l'obturateur 2 et l'électrovanne 3 sont à la position de repos et la pression différentielle ΔP est annulée. Si la microfuite continue et le débit de celle-ci demeure inférieur au débit prédéterminé du canal calibré 115-116, le cycle de fuite décrit précédemment résultant comprenant d'abord l'avance vers l'aval de la membrane et l'ouverture du canal de dérivation en réponse à une diminution de la pression aval P₂, puis le recul vers l'amont de la membrane et la fermeture du canal de dérivation en réponse à une augmentation de la pression aval P₂, est répété tant que la microfuite subsiste, la portion de clapet 21 demeurant immobile, en appui contre le siège 113. Typiquement, le détecteur de fuites avec les dimensions précitées est activé, c'est-à-dire la portion de membrane 23 est déformée pour fermer le contact 41, lorsque la chambre aval 124 a perdu environ 40 microlitres à travers la microfuite. La durée d'un cycle, c'est-à-dire le temps entre deux diminutions successives de la pression aval P₂, est inversement proportionnelle au faible débit à travers la microfuite. Plus la microfuite est petite et plus le débit à travers celle-ci est faible, plus le temps pour déformer la portion centrale de membrane 23 de l'obturateur 2 et la pousser de la position de repos amont vers la position de travail aval est grand. La durée d'un cycle pouvant être mesurée et le petit volume de fluide échappé étant préalablement mesuré, le détecteur de fuites peut servir de débitmètre de fuite.

Comme montré schématiquement à la figure 2, le détecteur de fuites 1 comprend également un circuit de surveillance de fuites 5. Le circuit de surveillance 5 comprend essentiellement un voyant de contrôle 50, ou autre dispositif de signalisation similaire, une bascule monostable redéclenchable 51, un compteur d'impulsions 52, un comparateur numérique 53 et un dispositif d'alarme 54.

La bascule monostable 51 reçoit à travers le voyant 50 des transitions montantes d'impulsions de cycle lors de la fermeture d'un contact de travail 551 d'un relais 55 inclus dans le circuit d'alimentation de l'électrovanne 3, en réponse à une fermeture de l'interrupteur 4. L'excitation tantôt intermittente, tantôt continue du voyant de contrôle 50 par les fermetures et ouvertures du contact 551 reproduit les états oscillants et stables de la portion de membrane 23 par rapport à l'aimant 42. La constante de temps τ de la bascule monostable 51 est programmée de sorte que la durée maximale de cycle de fuite DC correspondant à une fuite détectable soit égale ou inférieure à la constante de temps τ. Plus la constante de temps τ et la durée maximale de cycle DC sont grandes, plus est petit le débit d'écoulement minimal à travers une fuite que signale le détecteur de fuites. Ainsi, lorsqu'une petite fuite est détectée, plusieurs transitions montantes d'impulsion brève séparées d'une durée de cycle de fuite inférieure à τ sont appliquées successivement à l'entrée de la bascule monostable 51 et sont signalées par un clignotement du voyant de contrôle 50. La sortie de la bascule monostable 51 produit un créneau CR ayant une largeur égale à la somme des durées de cycle de fuite, à la constante de temps τ près, à une entrée de comptage C du compteur 52.

Pendant le créneau CR, le compteur 52 compte des impulsions d'horloge fournies à une entrée d'horloge H par une horloge 56 et ayant une période inférieure à la constante de temps τ. Par exemple, la période des impulsions d'horloge est égale à 10 ou 30 secondes. Le compte d'impulsions d'horloge fourni en sortie du compteur 52 correspond à la durée DF de la fuite depuis la dernière remise à zéro du compteur 52 et est comparé à un seuil de durée SD, exprimé en nombre d'impulsions d'horloge, dans le comparateur 53. Par exemple, le seuil SD est programmé à 10 minutes, ou une demi-heure ou une heure par exemple. Dès que la somme DF des durées des cycles atteint le seuil SD, la sortie du comparateur 53 active le dispositif d'alarme 54, et remet à zéro par une entrée RS le compteur 52 de manière à redéclencher le dispositif d'alarme si la fuite persiste pendant une prochaine durée SD.

Le dispositif d'alarme 54 contient un temporisateur et un voyant ou diode LED qui s'allume ou clignote pendant une durée prédéterminée, et/ou un buzzer ou une sonnerie qui émet un signal sonore pendant ladite durée prédéterminée, cette durée étant de l'ordre de quelques minutes en réponse à l'activation du dispositif d'alarme par le comparateur. Selon une autre variante, à l'expiration de chaque durée SD, le dispositif d'alarme déclenche un transmetteur téléphonique de manière à signaler la fuite par exemple à une société de télésurveillance et/ou déclenche l'électrovanne de secours VS afin que celle-ci ferme le réseau de distribution RD juste en aval du compteur CE.

Une mémoire incluse dans le dispositif d'alarme 54 enregistre l'heure de la première alarme et le nombre d'impulsions brèves de relais précédant chaque alarme correspondant à l'activation du dispositif d'alarme afin d'être consultés par l'intermédiaire d'un afficheur numérique ou d'un synthétiseur vocal et en déduire approximativement la "taille" et l'évolution de la fuite. Plus le nombre d'impulsions brèves croît, plus la fuite détectée tend à s'élargir.

Si le débit à travers la fuite augmente de sorte que la pression P₁ en amont de l'obturateur 2 devient nettement supérieure à la pression aval P₂ et le débit de la fuite devient égal ou supérieur au débit prédéterminé du canal de dérivation calibré 115-116, c'est-à-dire l'écoulement en aval de l'obturateur 2 augmente et devient supérieur à celui qu'il est possible d'écouler à travers le canal de dérivation calibré 115-116 par l'électrovanne 3, les cycles tels que décrits précédemment sont arrêtés dès que la pression différentielle ΔP = P₁ - P₂ devient supérieure à la pression d'ouverture de clapet P_{C}. Cette pression différentielle pousse la portion de clapet 22 vers l'aval, à l'encontre de son élasticité de rappel propre. Il en est de même lorsqu'une ouverture volontaire d'un robinet RO dans le réseau de distribution domestique RD provoque brusquement une chute de pression en aval de l'obturateur 2 dans la portion de conduite CA. Quasi-simultanément, la portion centrale de membrane 23 et la portion annulaire de clapet 22 sont poussées de la position amont en traits pleins à la position aval en traits pointillés, montrées au-dessous de l'axe XX dans la figure 3.

Dans ces deux cas, lorsque l'aimant 42 s'approche de la colonne 126, celui-ci ferme le contact 41 pour activer l'électrovanne 3 et ainsi retirer l'obturateur d'électrovanne 33 pour ouvrir le canal de dérivation 115-116, comme cela a été décrit précédemment. Toutefois, puisque la section calibrée du canal de dérivation est très petite par rapport à la section des conduits d'entrée et de sortie 110 et 120, la pression P₁ est suffisante pour décoller le sommet circulaire 221 de la portion annulaire de clapet 22 depuis le siège 113. La portion de clapet 22 s'écarte du siège 113 de quelques millimètres, typiquement 6 mm au plus, en compressant la portion de liaison 24 et les côtés de cuvette 230 de la portion centrale de membrane initialement tronconiques en une portion sensiblement circulaire coudée et en déformant quelque peu l'aile tronconique périphérique externe de la portion de clapet contenant les lumières 222. Le fluide passe ainsi pour l'essentiel directement de la chambre amont 114 à la chambre aval 124 à travers les lumières 222 de l'obturateur 2 qui est à une position aval analogue à celle illustrée en traits pointillés au-dessous de l'axe XX dans la figure 3. Cette position aval d'obturateur est d'autant plus décalée vers l'aval que le débit demandé par l'ouverture du robinet RO est grand.

Lorsque le robinet précédemment ouvert RO est fermé, la contre-pression P₂ exercée par le fluide dans la chambre aval 124 contre l'obturateur élastique 2 augmente brusquement. Dès que la pression différentielle ΔP = P₁ - P₂ atteint la pression d'ouverture de clapet P_{C}, la portion annulaire de clapet 22 grâce à son élasticité propre exercée vers l'amont revient à la position de repos, avec le sommet semi-torique 221 appliqué contre le siège 113. Simultanément, l'aimant 42 est éloigné de la colonne 126, le contact 41 s'ouvre et la portion centrale de membrane 23 se déforme pour passer de la position aval saillant en traits pointillés montrée à la figure 3 à la position amont en traits pleins entourée par la portion annulaire de clapet 22. Lors de ce passage de l'obturateur 2 vers la position de repos, l'obturateur 2 refoule une petite quantité de fluide à travers le canal de dérivation 115-116 avant la fermeture de celui-ci par l'obturateur 33 suite à la désactivation de l'électrovanne 3 par l'ouverture du contact 41. Le détecteur de fuites est alors de nouveau dans la position de repos montrée à la figure 2.

Au début de l'écoulement important de fluide précédent, une seule transition est produite par le relais 55 en réponse à la fermeture du contact 41 par l'approche de l'aimant 42. Le voyant de contrôle 50 est allumé continûment. La bascule monostable 51 ne produit qu'une impulsion de durée égale à la constante de temps τ. Le nombre d'impulsions d'horloge compté par le compteur 52 et appliqué au comparateur 53 est nettement inférieur au seuil de durée SD, ce qui ne déclenche pas le dispositif d'alarme 54.

Selon une variante, l'électrovanne 3 est une électrovanne proportionnelle dans laquelle la section de l'ouverture du canal de dérivation 115-116 est réglable manuellement ou par télécommande, en limitant la course d'ouverture/fermeture de l'obturateur 33. Grâce à ce réglage de section, le débit de l'écoulement de fluide depuis le conduit d'entrée 110 vers le conduit de sortie 120 est ajusté lors d'une petite fuite pour combler le petit volume de fluide échappé par la fuite.

En conséquence, la durée des cycles de fuite peut être ajustée, par exemple diminuée en ouvrant progressivement le canal de dérivation 115-116 jusqu'à ce que le signal intermittent produit par le voyant 50 lors des déplacements cycliques de la portion de membrane 23 se transforme en un signal continu, la pression différentielle ΔP ayant franchi la pression d'ouverture de clapet P_{C}. Lors de cette transformation, la fuite est équivalente au canal de dérivation. Une graduation indique une valeur de débit de fuite après calibrage de la section variable du canal de dérivation. En variante, le déclenchement de l'électrovanne peut être retardé par un circuit de retard programmable en réponse à la fermeture du contact 41, le retard ainsi programmé augmentant le petit volume de fluide échappé à combler et ajustant également la durée des cycles de fuite.

Optionnellement, un clapet antiretour 36 est prévu dans un deuxième canal de dérivation 37 dans le corps de détection 11-12, en parallèle avec l'électrovanne 3, entre les tubes 31 et 32 selon la réalisation illustrée à la figure 2, ou entre les trous 115 et 116, ou directement entre les chambres 114 et 124 ou les conduits 110 et 120. Le clapet antiretour s'ouvre pour un écoulement du fluide depuis le conduit de sortie 120 vers le conduit d'entrée 110 lorsque la pression amont P₁ devient inférieure à la pression aval P₂. Par exemple, une dépression dans le conduit d'entrée 110 est créée lors d'une vidange de la canalisation CA en amont du détecteur de fuites 1, ou une surpression dans le conduit de sortie 120 est créée lors d'un échauffement du fluide, tel que gaz, dans le réseau de distribution RD en aval du détecteur de fuites. L'ouverture du clapet antiretour 36 décharge l'obturateur 2 et particulièrement la portion centrale de membrane 23, et le soumet de nouveau à une pression différentielle nulle, comme en fonctionnement normal, réseau de distribution fermé sans fuite. Des élévations de température de gaz en aval du détecteur de fuites sont compensées à travers le clapet antiretour.

Selon une deuxième variante, l'interrupteur 4 est un interrupteur inductif, c'est-à-dire l'aimant 42 est remplacé par une pièce métallique telle qu'une bille, et le contact à lames souples 41 est remplacé par un détecteur de proximité inductif. Le circuit d'alimentation 35 alimente un oscillateur dans le détecteur inductif pour générer un champ électromagnétique local variable dont la perturbation par le rapprochement de la pièce métallique est détectée pour activer l'électrovanne 3.

Selon une troisième variante, le capteur de déplacement constitué par l'interrupteur 4 avec l'aimant 42 et le contact 41 pour détecter le déplacement et la déformation de la portion centrale de membrane 23 de l'obturateur 2 est remplacé par un capteur de déformation comprenant quatre jauges de contrainte disposées respectivement dans les quatre branches d'un pont résistif de type pont de Wheatstone. Le capteur de déformation est fixé sur le côté tronconique 230 de la portion de membrane 23. La colonne 126 dans l'alésage 125 de la partie de corps aval 12 est supprimée.

Deux jauges de contrainte correspondant à des premières branches opposées du pont de Wheatstone ont des résistances avec des brins radiaux et s'étendent sensiblement le long de deux demi-troncs de cône en regard concentriques à la portion de membrane. Les deux autres jauges de contrainte sont des résistances avec des brins demi-circulaires concentriques aux premières jauges et constituent deux autres branches opposées du pont de Wheatstone. Le capteur de déformation est imprimé et enrobé dans la matière constituant l'obturateur, telle qu'élastomère, ou pris en sandwich entre deux feuilles isolantes formant un ensemble collé sur le côté tronconique 230 de la portion de membrane 23. Les conducteurs de branchement du pont sont noyés ou supportés dans la matière élastomère des rayons 223 et de la portion de joint 24, et sont des fils isolés lors de leur traversée du corps 11-12.

Deux bornes opposées du pont de Wheatstone sont reliées au circuit d'alimentation 35 et deux autres bornes opposées du pont de Wheatstone sont reliées aux bornes de la bobine 30 de l'électrovanne 3 à travers le relais 55 et un circuit d'amplification d'adaptation. Une différence de potentiel de déséquilibre du pont de Wheatstone déclenche l'ouverture de l'électrovanne 3, en réponse à une déformation de la portion de membrane 23 provoquée par une pression différentielle ΔP = P₁ - P₂ supérieure à la pression de rappel de membrane P_{M}, d'une manière analogue au déplacement de l'aimant 42 vers le contact 41 dans la réalisation décrite précédemment.

Dans cette variante, le volume de fluide échappé par une fuite pour activer l'électrovanne 3 peut être inférieur à celui pour activer l'électrovanne 3 selon la première réalisation à interrupteur magnétique 4.

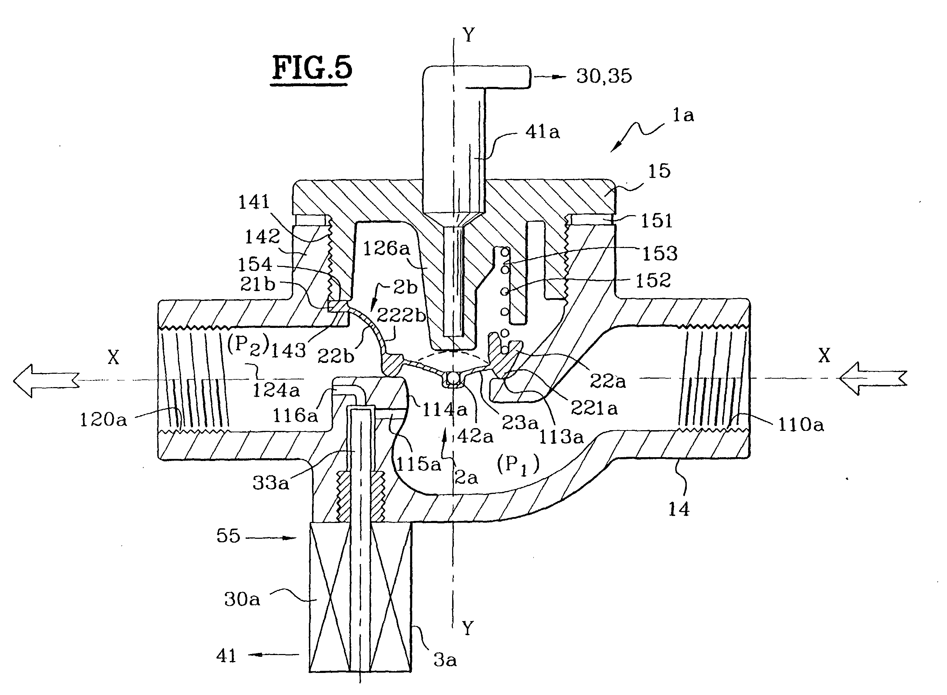

En se référant maintenant à la figure 5, le détecteur de fuites la selon une deuxième réalisation de l'invention comprend un corps 14-15 à profil longitudinal en T dans lequel un siège longitudinal 113a et une portion centrale de membrane 23a d'un obturateur s'appuyant sur le siège 113a ont leur axe YY disposé perpendiculairement à l'axe longitudinal XX des conduits d'entrée et de sortie de fluide 110a et 120a dans le corps du détecteur.

Le corps de détecteur comprend principalement une partie longitudinale tubulaire 14 ayant à ses extrémités les conduits d'entrée et de sortie 110a et 120a à raccorder respectivement aux portions amont CA₁ et aval CA₂ de la conduite d'alimentation de fluide, et un chapeau cylindrique 15 vissé dans un alésage taraudé 141 ménagé dans une saillie cylindrique 142 latérale à la partie de corps 14 et colinéaire à l'axe YY. Le sommet discoïde du chapeau est appliqué contre une surface porteuse du corps 14 par l'intermédiaire d'une rondelle de joint 151.

Au centre du chapeau 15 et coaxialement à l'axe YY est dressée une colonne 126a ayant un trou borgne central dans laquelle est logée un contact à fermeture 41a, ou en variante un détecteur de proximité inductif. En regard du sommet de la colonne est positionné un aimant 42b, ou en variante une bille métallique, fixé au centre d'une portion de membrane mince à profil conique ou parabolique en forme de coupelle 23a, constituant une portion centrale intégrante d'un obturateur élastique 2a.

Selon une première variante montrée à droite de l'axe YY dans la figure 5, la portion de membrane 23a est entourée par une portion de clapet beaucoup plus épaisse 22a en forme de bourrelet en V dont le sommet 221a est appliqué contre le siège 113a par un ressort hélicoïdal de compression 152. Une extrémité du ressort 152 s'appuie contre le fond d'un évidement borgne de guidage 153 pratiqué dans le chapeau 15 et s'étend autour de la colonne 126a. L'autre extrémité du ressort 152 s'appuie dans une gorge circulaire d'un bourrelet de la portion annulaire de clapet 22a de manière à pousser le bourrelet contre le siège 113a et à laisser un passage de fluide sous le chapeau 15 et devant la colonne 126a. En variante, l'autre extrémité du ressort 152 est noyée dans le bourrelet de portion annulaire 22a. Le siège 113a est disposé au centre du corps 14 et devant un orifice 114a centré sur l'axe YY et formant une chambre amont coudée communiquant avec le conduit d'entrée 110a.

Selon une deuxième variante montrée à droite de l'axe YY dans la figure 5, l'obturateur 2b comprend une portion annulaire de clapet 22b plus épaisse que la portion centrale de membrane 23a. La portion de clapet 22b est une couronne tronconique. Dans la portion de clapet 22b, des lumières 222b sont ménagées pour passer du fluide sous le chapeau 15 depuis le conduit de sortie 120a. La grande base de la couronne tronconique de l'obturateur 22b est terminée en rondelle d'étanchéité 21b qui est pressée entre un épaulement de fond 143 de l'alésage taraudé 141 dans la saillie latérale 142 et une extrémité interne circulaire 154 lorsque le chapeau 15 est vissé à fond dans la partie de corps longitudinale 14. La petite base de la portion de clapet tronconique 22b est un bourrelet en V s'appuyant par son élasticité propre contre le siège 113a. La portion de clapet 22b et la portion de membrane 23a constituent un obturateur monolithique en élastomère 2b. Selon cette deuxième variante, l'obturateur 2b est ainsi conformé de manière sensiblement analogue à l'obturateur 2 selon la première réalisation montrée à la figure 3.

Dans la partie de corps longitudinale 14, entre l'orifice central 114a formant chambre amont et l'extrémité amont 124a du conduit de sortie 120a est percé un canal de dérivation calibré coudé 115a-116a, de diamètre nettement inférieur à celui des conduits 110a et 120a. Le coude du canal 115a-116a est obturé par une extrémité de l'obturateur 33a d'une électrovanne 3a lorsque la portion centrale de membrane 23a est au repos en position basse, avec l'aimant 42a éloigné du sommet de la colonne 126a. La bobine 30a de l'électrovanne 3a est alimentée par le circuit d'alimentation 35 à travers l'interrupteur magnétique constitué par le contact de fermeture 41a et l'aimant 42a et à travers le relais 55 du circuit de surveillance 5 de la même manière que la bobine 30 de l'électrovanne 3 selon la première réalisation montrée à la figure 2.

Le fonctionnement du détecteur de fuites la selon cette deuxième réalisation est sensiblement analogue à celui décrit en détail dans la première réalisation.

Suite à une faible dépression dans le conduit aval 120a et plus précisément, suite à une pression différentielle ΔP = P₁ - P₂ sensiblement plus grande que la pression de rappel P_{M} de la portion centrale de membrane 23a, et tant que le débit de la fuite correspondante est inférieur au débit prédéterminé du canal calibré 115a-116a, la portion de membrane 23a est chargée et déformée progressivement pour amener l'aimant 42a vers l'aval, contre le sommet de la colonne 126a, ce qui ferme le contact 41a et active l'électrovanne 3a. La face amont de la portion centrale de membrane 23a est déformée d'un état convexe à un état concave. L'obturateur d'électrovanne 33a ouvre le canal calibré 115a-116a pour évacuer du fluide de la chambre amont 114a vers la chambre aval 124a. La portion de clapet 22a, 22b demeure appliquée sur le siège 113a grâce à la force de rappel du ressort 152 selon la première variante, ou grâce à la force de rappel élastique propre de la couronne tronconique de la portion de clapet 22b selon la deuxième variante, comme dans la première réalisation. Le canal calibré 115a-116a est refermé cycliquement, comme dans la première réalisation, chaque fois que du fluide provenant de la chambre amont 113a comble un petit volume dans la chambre aval 124a à la suite d'une fuite de fluide dans le réseau de distribution RD.

Lors d'un écoulement important, ou dès que le débit de la fuite est égal ou supérieur au débit prédéterminé du canal calibré 115a-116a, la portion annulaire de clapet 22a, 22b avec la portion centrale de membrane 23a se lève à l'encontre de la pression de rappel de clapet P_{C} exercée par le ressort 152 selon la première variante ou de la pression de rappel P_{C} de la couronne tronconique élastique de la portion de clapet 22b selon la deuxième variante. L'aimant 42a se rapproche du sommet de la colonne 126a et peut buter contre celui-ci, ce qui ferme le contact 41a. L'électrovanne 3a ouvre le canal calibré 115a-116a. L'essentiel du fluide s'écoule directement de la chambre 114a vers la chambre 124a en passant à travers le siège 113a ainsi dégagé par l'obturateur 2a/2b rétracté vers le chapeau 15.

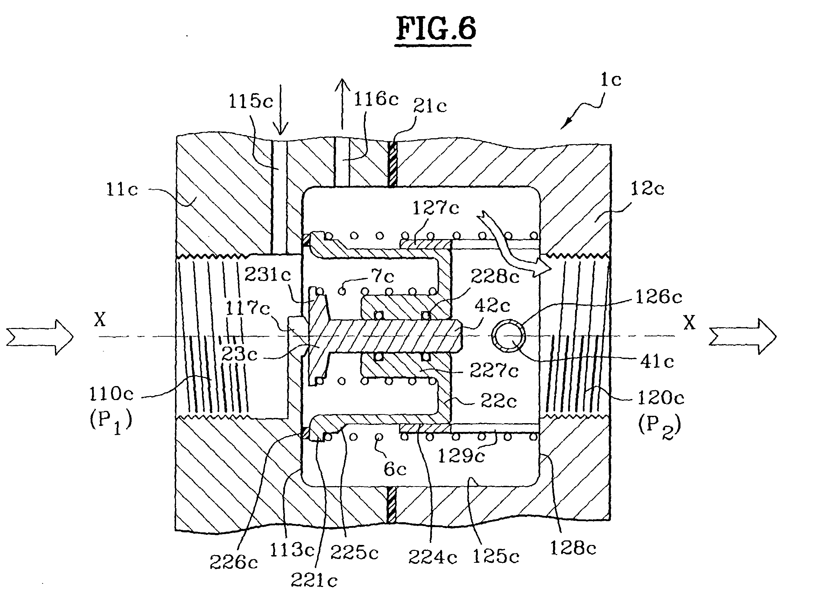

En référence à la figure 6, le détecteur de fuites 1c selon la troisième réalisation de l'invention est du type à siège transversal, comme le détecteur de fuites dans la figure 2, mais supporte mieux des températures de fluide élevées dans la mesure où l'obturateur 2 selon la première réalisation est remplacé par un obturateur qui peut être métallique.

Le détecteur de fuites 1c présente une partie de corps amont 11c avec un conduit d'entrée 110c et des trous 115c et 116c de canal de dérivation calibré pour électrovanne 3, et une partie de corps aval 12c avec un conduit de sortie 120c, un chambrage aval 125c, une demi-colonne radiale ou colonne diamétrale 126c contenant un contact de fermeture 41c qui coopère avec un aimant permanent 42c dans un interrupteur magnétique du circuit d'alimentation de l'électrovanne, et une rondelle de joint 21c entre des surfaces diamétrales des parties de corps 11c et 12d pressées l'une contre l'autre par des vis d'assemblage. Tous les éléments énoncés ci-dessus ont des fonctions analogues à ceux de la première réalisation montrée à la figure 2, désignés par les mêmes repères numériques, à l'indice c près.

Comparativement au détecteur 1, la portion annulaire de clapet 22 et la portion centrale de membrane 23 de l'obturateur 2 sont respectivement remplacées par un premier piston métallique 22c rappelé vers l'amont contre un siège 113c sous l'action d'un premier ressort de compression 6c, et par un deuxième piston métallique 23c rappelé vers l'amont contre une butée centrale 117c sous l'action d'un deuxième ressort de compression 7c.

Le premier piston 22c est une bague cylindrique ayant une extrémité aval 224c de surface périphérique montée à coulissement axial dans un guide cylindrique 127c venant d'usinage à l'intérieur du chambrage aval 125c de la partie de corps aval 12c. Sensiblement à mi-longueur, la surface périphérique du premier piston comporte un épaulement intermédiaire 225c qui vient en butée contre l'extrémité amont du guide 127c pour limiter la course aval du piston 22c. Un épaulement à l'extrémité amont 221c du piston 22c sert de portée pour l'extrémité amont du premier ressort 6c. L'extrémité aval du ressort 6c entoure le guide 127c et est appliquée contre un fond circulaire diamétral aval 128c du chambrage 125c.

Une rondelle de joint 226c est collée contre la face diamétrale de l'extrémité amont 221c du premier piston. La rondelle 226c étanchéifie le passage entre le conduit amont 110c et le chambrage 125c grâce à l'effort de rappel exercé vers l'amont par le ressort 6c sur l'extrémité de premier piston 221c contre le siège 113c. Si le premier piston est poussé vers l'aval, le fluide passe du conduit 110c vers le conduit 120c en longeant le siège 113c et le chambrage 125c et en traversant des lumières 129c régulièrement réparties dans la base du guide 127c, en aval du premier piston 22c.

Le deuxième piston 23c présente un corps cylindrique ayant une extrémité amont supportant l'aimant 42c et une extrémité aval en forme d'embase circulaire 231c. Le corps cylindrique du piston 23c est monté à coulissement longitudinal dans un fourreau central 227c du premier piston annulaire 22c en forme de bague. Deux joints toriques 228c dans le fourreau assurent l'étanchéité autour du piston 23c contre tout passage de fluide depuis le conduit 110c vers le conduit 120c à travers le premier piston. L'embase amont 231c est sollicitée vers une demi-colonne radiale située à l'extrémité aval du conduit d'entrée 110c, formant la butée 117c, par le deuxième ressort 7c. L'extrémité aval du deuxième ressort 7c est appliquée contre le fond du premier piston 22c et guidée par la périphérie externe du fourreau 227c.

En variante, la butée 117c suspendue dans le conduit 110c est supprimée, et les extrémités du deuxième ressort 7c sont fixées respectivement à l'embase 231c du piston 23c et au fond aval du premier piston 22c.

La raideur du deuxième ressort 7c est nettement plus faible que la raideur du premier ressort 6c afin que tout coulissement vers l'aval du deuxième piston 23c à l'encontre du ressort 7c ne cause aucun déplacement vers l'aval du premier piston 22c, et donc du clapet formé par l'extrémité amont 221c de celui-ci et le siège 113c.

A la suite d'une microfuite dans le réseau de distribution RD, lorsque la pression différentielle ΔP = P₁ - P₂ est suffisante pour vaincre l'effort de rappel exercé par le deuxième ressort 7c contre l'embase de deuxième piston 231c, le deuxième piston 23c est poussé vers l'aval et l'aimant 42c est rapproché du contact 41c pour fermer celui-ci. L'électrovanne 3 est alors activée et ouvre le canal de dérivation calibré 115c-116c, comme dans la première réalisation. Après comblement d'un petit volume de fluide dans le chambrage aval 125c, sachent que le débit de la microfuite est inférieur au débit prédéterminé du canal de dérivation calibré 115d-116d, le deuxième ressort 7c est détendu progressivement pour que le piston 23c retourne vers sa position de repos amont, contre la butée 117c selon la réalisation illustrée, dès que l'effort de rappel exercé par le ressort 7c est suffisant pour vaincre la pression différentielle ΔP qui a diminuée. Le moyen constitué par le piston 23c et le ressort 7c est ainsi équivalent à la portion centrale de membrane 23 dans le détecteur de fuites 1 selon la première réalisation.

Lorsque le débit à travers la microfuite augmente et devient égal ou supérieur au débit prédéterminé du canal de dérivation calibré 115c-116c, ou bien lorsque le débit augmente brusquement par ouverture d'un robinet RO, les cycles tels que celui décrit précédemment sont arrêtés. La pression différentielle ΔP devient supérieure à la pression d'ouverture P_{C} du clapet formé par le premier piston 22c et le premier ressort 6c, c'est-à-dire est suffisante pour pousser le premier piston 22c à l'encontre du ressort 6c. L'extrémité amont du guide 127c limite la course aval du premier piston 22c par l'intermédiaire de son épaulement 225c, lorsque la pression P₁ devient très élevée. Le fluide s'écoule principalement en passant entre le siège 113c et la rondelle de joint 226c à l'extrémité amont 221c du premier piston, entre le premier piston 22c et le chambrage 125c, et en traversant les lumières 129c. La section du passage cylindrique entre le piston 22c et le chambrage 125c et la surface totale des lumières 129c sont sensiblement égales à la section des conduits d'entrée et de sortie 110c et 120c afin d'éviter une perte de charge élevée en fonctionnement normal. Le moyen constitué par le piston 22c et le ressort 6c est ainsi équivalent à la portion annulaire de clapet 22 dans le détecteur de fuites 1 selon la première réalisation. Comme dans celle-ci, l'électrovanne 3 ouvre le canal calibré 115c-116c suite au rapprochement de l'aimant 42c et du contact 41c simultanément au déplacement vers l'aval du premier piston 22c.

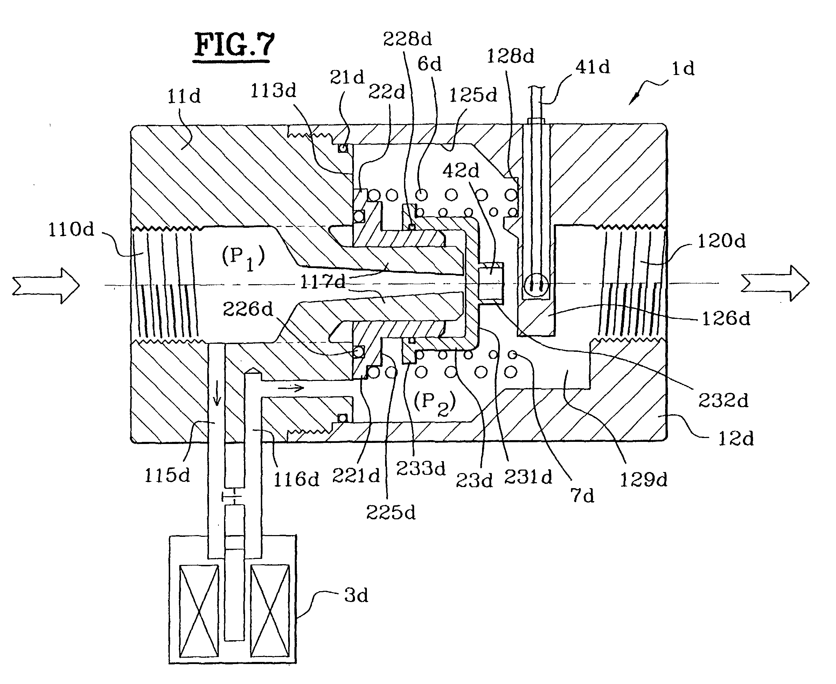

En référence à la figure 7, le détecteur de fuites 1d selon une variante de la troisième réalisation de l'invention du type à siège transversal présente une partie de corps amont 11d avec un conduit d'entrée 110d et des trous 115d et 116d de canal de dérivation calibré pour électrovanne 3d, et une partie de corps aval 12d avec un conduit de sortie 120d, un chambrage aval 125d, une demi-colonne radiale 126d contenant un contact de fermeture 41d qui coopère avec un aimant permanent 42d dans un interrupteur magnétique du circuit d'alimentation de l'électrovanne, et un joint torique 21d entre des épaulements d'extrémité complémentaires filetés des parties de corps 11d et 12d vissées l'une dans l'autre. Tous les éléments énoncés ci-dessus ont des fonctions analogues à ceux de la première réalisation montrée à la figure 2, désignés par les mêmes repères numériques, à l'indice d près.

Comparativement au détecteur de fuites 1c, le détecteur de fuites 1d comprend également un premier piston métallique 22d rappelé vers l'amont contre un siège 113d sous l'action d'un premier ressort de compression 6d, et un deuxième piston métallique 23d rappelé vers l'amont sous l'action d'un deuxième ressort de compression 7d. Toutefois, le deuxième piston 23d est monté à coulissement autour du premier piston 22d.

Le premier piston 22d est une bague cylindrique montée à coulissement axial autour de deux branches longitudinales de guidage 117d venant d'usinage à l'extrémité aval du conduit d'entrée 110d de la partie de corps amont 11d. Les branches 117d saillent dans le chambrage aval 125d et sont plus longues que le piston 22d. Un épaulement à l'extrémité amont 221d du piston 22d sert de portée pour l'extrémité amont du premier ressort 6d. L'extrémité aval du ressort 6d est appliquée contre un fond circulaire diamétral aval 128d du chambrage 125d, juste en amont de la demi-colonne 126d devant laquelle un passage de fluide latéral 129d est pratiqué.

Un joint torique 226d est encastré dans une gorge circulaire ménagée dans la face diamétrale de l'extrémité amont 221d du premier piston. Le joint 226d étanchéifie le passage entre le conduit amont 110d et le chambrage 125d grâce à l'effort de rappel exercé vers l'amont par le ressort 6d sur l'extrémité de premier piston 221d contre le siège 113d. Si le premier piston est poussé vers l'aval, le fluide passe du conduit 110d vers le conduit 120d en longeant le siège 113d et le chambrage 125d.

Le deuxième piston 23d est une douille cylindrique ayant en amont un fond 231d dont la face aval comporte une petite paroi cylindrique 232d dans laquelle est encastré l'aimant 42c. Le corps cylindrique du piston 23d est monté à coulissement longitudinal autour du premier piston 22d en forme de bague et guide l'extrémité aval du deuxième ressort 7d s'appuyant contre une collerette amont 233d du piston 23d. Un joint torique 228d dans la collerette amont 233d du piston 23d assure l'étanchéité autour du piston 22d contre tout passage de fluide depuis le conduit 110d vers le conduit 120d entre les pistons. Le fond aval du deuxième piston 231d est au repos, en butée contre l'extrémité aval des branches de guidage 117d sous l'action du deuxième ressort 7d, les extrémités libres aval des branches de guidage 117d saillant vers l'aval du premier piston 22d lorsque celui-ci est appliqué contre le siège 113d. L'extrémité aval du deuxième ressort 7d est appliquée contre le fond aval 128d du chambrage 125d, le premier ressort 6d entourant le deuxième ressort 7d.

En variante, les branches de guidage 117d suspendues dans le conduit 110d sont moins longues, ou bien sont supprimées, et les extrémités du deuxième ressort 7d sont fixées respectivement à la collerette 231d du piston 23d et au fond aval 128d du chambrage 125d. Selon une autre variante, l'extrémité amont du premier piston 22d est montée à coulissement dans le conduit d'entrée 110d.

La raideur du deuxième ressort 7d est nettement plus faible que la raideur du premier ressort 6d afin que tout coulissement vers l'aval du deuxième piston 23d à l'encontre du ressort 7d ne cause aucun déplacement vers l'aval du premier piston 22d, et donc du clapet formé par l'extrémité amont 221d de celui-ci et le siège 113d.

A la suite d'une microfuite dans le réseau de distribution RD, lorsque la pression différentielle ΔP = P₁ - P₂ est suffisante pour vaincre l'effort de rappel exercé par le deuxième ressort 7d contre la collerette 233d du deuxième piston 23d, le deuxième piston 23d est poussé vers l'aval et l'aimant 42d est rapproché du contact 41d pour fermer celui-ci, la paroi 232d entourant l'aimant 42d pouvant buter contre la demi-colonne 126d. L'électrovanne 3d est alors activée et ouvre le canal de dérivation calibré 115d-116d. Après comblement d'un petit volume de fluide dans le chambrage aval 125d, et tant que le débit de la microfuite est inférieur au débit prédéterminé du canal de dérivation calibré 115d-116d, le deuxième ressort 7d est détendu progressivement pour que le piston 23d retourne vers sa position de repos amont, contre l'extrémité de butée aval des branches 117d selon la réalisation illustrée, dès que l'effort de rappel exercé par le ressort 7d est suffisant pour vaincre la pression différentielle ΔP qui a diminuée. Le moyen constitué par le piston 23d et le ressort 7d est ainsi équivalent à la portion centrale de membrane 23 dans le détecteur de fuites 1 selon la première réalisation.

Comparativement à la figure 6, la partie du deuxième piston 7d soumise à la pression différentielle ΔP est constituée essentiellement par le fond 231d qui a une surface plus grande que la section du corps du piston 23c. Le piston 7d est donc plus sensible à des faibles dépressions, ce qui augmente la sensibilité du détecteur aux microfuites. La course du deuxième piston 23d est alors plus petite que la course du premier piston 22d.

Lorsque le débit à travers la microfuite augmente et devient égal ou supérieur au débit prédéterminé du canal de dérivation calibré 115d-116d, ou bien lorsque le débit augmente brusquement par ouverture d'un robinet RO, les cycles tels que celui décrit précédemment sont arrêtés. La pression différentielle ΔP devient supérieure à la pression d'ouverture P_{C} du clapet formé par le premier piston 22d et le premier ressort 6d, c'est-à-dire est suffisante pour pousser le premier piston 22d à l'encontre du ressort 6d. La collerette amont 233d du deuxième piston 23d peut limiter la course aval du premier piston 22d par l'intermédiaire d'un épaulement 225d à l'extrémité amont 221d, lorsque la pression P₁ devient très élevée, la paroi 232d entourant l'aimant 42d dans le piston 22d étant en butée contre la demi-colonne 126d. Le fluide s'écoule principalement en passant entre le siège 113d et le joint torique 226d à l'extrémité amont 221d du premier piston et entre l'ensemble des premier et deuxième pistons 22d et 23d et le chambrage 125d. La section du passage cylindrique entre l'ensemble des pistons 22d et 23d et le chambrage 125d est sensiblement égale à la section des conduits d'entrée et de sortie 110d et 120d afin d'éviter une perte de charge élevée en fonctionnement normal. Le moyen constitué par le piston 22d et le ressort 6d est ainsi équivalent à la portion annulaire de clapet 22 dans le détecteur de fuites 1 selon la première réalisation. Comme dans celle-ci, l'électrovanne 3d ouvre le canal calibré 115d-116d suite au rapprochement de l'aimant 42d et du contact 41d simultanément au déplacement vers l'aval du premier piston 22d.

## Revendications

1. Détecteur de fuites, **caractérisé en ce qu'**il comprend
un obturateur (2) disposé entre un conduit d'entrée de fluide (110) et un conduit de sortie de fluide (120) et en position d'ouverture tant que le fluide dans les conduits d'entrée et de sortie exerce une pression différentielle sur l'obturateur supérieure à une première pression (P_{C}),
un moyen de détection de fuites (23, 42) disposé sensiblement au centre de l'obturateur et déplaçable entre les conduits d'entrée et de sortie lorsque la pression différentielle varie entre une deuxième pression (P_{M}) inférieure à la première pression et la première pression (P_{C}) et l'obturateur demeure à une position de fermeture, et
un moyen de transfert de fluide (3, 115-116) commandé par le moyen de détection de fuites pour passer du fluide du conduit d'entrée (110) au conduit de sortie (120) dès que la pression différentielle devient sensiblement supérieure à la deuxième pression (P_{M}).

2. Détecteur de fuites conforme à la revendication 1, dans lequel
l'obturateur (2) comprend un corps monolithique en matière élastique ayant une portion annulaire (22) avec une première raideur pour qu'à la position de fermeture, la portion annulaire soit appliquée hermétiquement contre un siège (113) en direction du conduit d'entrée (110) tant que la pression différentielle est inférieure à la première pression (P_{C}), et
le moyen de détection de fuites comporte une portion centrale (23) de l'obturateur au centre de la portion annulaire (22), avec une deuxième raideur qui est inférieure à la première raideur afin que la portion centrale se déforme lorsque la pression différentielle devient supérieure à la deuxième pression (P_{M}), et un capteur de déplacement (42) supporté au moins partiellement par la portion centrale (23) et détectant des déplacements de la portion centrale pour commander le moyen de transfert de fluide (3, 115-116).

3. Détecteur de fuites conforme à la revendication 2, dans lequel le corps monolithique de l'obturateur (2) a une périphérie formant un joint (21 ; 21b) serré entre deux parties (11, 12 ; 14, 15) d'un corps du dispositif.

4. Détecteur de fuites conforme à la revendication 2 ou 3, dans lequel la portion annulaire (22, 22b) comporte des lumières de passage de fluide (222, 222b), de préférence ayant une surface totale sensiblement égale à la section des conduits d'entrée et de sortie (110, 120 ; 110a, 120a).

5. Détecteur de fuites conforme à la revendication 1, dans lequel
l'obturateur (2a) comprend un corps monolithique en matière élastique ayant une portion annulaire (22a) qui à la position de fermeture reste appliquée hermétiquement contre un siège (113a) en direction du conduit d'entrée (110a) par un ressort de compression (153) ayant une première raideur tant que la pression différentielle est inférieure à la première pression (P_{C}), et
le moyen de détection de fuites comporte une portion centrale (23a) de l'obturateur au centre de la portion annulaire (22a), avec une deuxième raideur qui est inférieure à la première raideur afin que la portion centrale se déforme lorsque la pression différentielle devient supérieure à la deuxième pression (P_{M}), et un capteur de déplacement (42a) supporté au moins partiellement par la portion centrale (23a) et détectant des déplacements de la portion centrale pour commander le moyen de transfert de fluide (3a, 115a-116a).

6. Détecteur de fuites conforme à l'une quelconque des revendications 2 à 5, dans lequel la portion centrale (23, 23a) de l'obturateur (2, 2a) est moins épaisse que la portion annulaire (22, 22a) de l'obturateur.

7. Détecteur de fuites conforme à l'une quelconque des revendications 2 à 6, dans lequel la portion centrale (23, 23a) a sensiblement une forme conique convergeant vers le conduit d'entrée (110, 110a) dans un état déchargé lorsque la pression différentielle est inférieure à la deuxième pression (P_{M}) et une forme conique convergeant vers le conduit de sortie (120, 120a) dans un état chargé lorsque la pression différentielle est nettement supérieure à la deuxième pression (P_{M}).

8. Détecteur de fuites conforme à l'une quelconque des revendications 2 à 7, dans lequel la portion annulaire (22) a une section épaisse radiale en V avec un sommet (221) coopérant avec le siège (113).

9. Détecteur de fuites conforme à la revendication 1, dans lequel
l'obturateur comprend un premier piston annulaire (22c ; 22d) monté à coulissement axial sensiblement dans les conduits d'entrée et de sortie (110c, 120c ; 110d, 120d), et un premier ressort (6c ; 6d) avec une première raideur pour qu'à la position de fermeture, le premier piston soit appliqué hermétiquement contre un siège (113c ; 113d) en direction du conduit d'entrée (110c ; 110d) tant que la pression différentielle est inférieure à la première pression (P_{C}), et
le moyen de détection de fuites comporte un deuxième piston (23c ; 23d) monté à coulissement hermétique relativement au premier piston (22c ; 22d), et un deuxième ressort (7c ; 7d) avec une deuxième raideur qui est inférieure à la première raideur afin que le deuxième piston se déplace lorsque la pression différentielle devient supérieure à la deuxième pression (P_{M}), et un capteur de déplacement (42c ; 42d) supporté au moins partiellement par le deuxième piston (23c ; 23d) et détectant des déplacements du deuxième piston pour commander le moyen de transfert de fluide (3, 115c-116c ; 3d, 115d-116d).

10. Détecteur de fuites conforme à la revendication 9, dans lequel le deuxième piston (23c) est monté à coulissement dans le premier piston (22c), lequel entoure partiellement le deuxième ressort (7c) et est entouré partiellement par le premier ressort (6c).

11. Détecteur de fuites conforme à la revendication 9, comprenant un guide (127c) dans lequel le premier piston (22c) est monté à coulissement, le guide étant fixé au conduit de sortie (120c) et comportant des lumières de passage de fluide (129c), de préférence ayant une surface totale sensiblement égale à la section des conduits d'entrée et de sortie (110c, 120c).

12. Détecteur de fuites conforme à la revendication 9, dans lequel le premier piston (22d) est monté à coulissement dans le deuxième piston (23d), lequel est entouré partiellement par les deuxième et premier ressorts (7d, 6d).

13. Détecteur de fuites conforme à l'une quelconque des revendications 1 à 12, dans lequel le moyen de détection comprend un aimant (42, 42a, 42c) supporté par une portion centrale déplaçable (23, 23a, 23c) de l'obturateur et un contact d'interrupteur électrique (41, 41a, 41c) suspendu dans le conduit de sortie (120, 120a, 120c) pour relier un moyen d'alimentation électrique (35) au moyen de transfert de fluide (3, 115-116 ; 3a, 115a-116a ; 3, 115c-116c) lorsque l'aimant est proche du contact d'interrupteur électrique.

14. Détecteur de fuites conforme à la revendication 13, dans lequel l'aimant (42, 42a, 42c) est remplacé par une pièce métallique, et le contact d'interrupteur électrique (41, 41a, 41c) est remplacé par un détecteur de proximité inductif.

15. Détecteur de fuites conforme à l'une quelconque des revendications 1 à 8, dans lequel le moyen de détection comprend un pont de jauges de contrainte supporté par une portion centrale déformable (23, 23a) de l'obturateur pour relier un moyen d'alimentation électrique (35) au moyen de transfert de fluide (3, 115-116 ; 3a, 115a-116a) lorsque la pression différentielle est supérieure à la deuxième pression (P_{M}).

16. Détecteur de fuites conforme à l'une quelconque des revendications 1 à 15, dans lequel le moyen de transfert de fluide comprend un canal de dérivation calibré (115-116, 115a-116a) entre le conduit d'entrée (110, 110a) et le conduit de sortie (120, 120a) et contournant l'obturateur (2, 2a) et un moyen (3, 3a) pour ouvrir le canal de dérivation seulement lorsque la pression différentielle est au moins supérieure à la deuxième pression (P_{M}).

17. Détecteur de fuites conforme à la revendication 16, dans lequel le moyen pour ouvrir (3, 3a) comprend un moyen pour faire varier la section du canal de dérivation (115-116, 115a-116a) afin de signaler le franchissement de la pression différentielle par la première pression (P_{C}).

18. Détecteur de fuites conforme à la revendication 16 ou 17, dans lequel le moyen de transfert de fluide comprend un deuxième canal de dérivation (37) muni d'un clapet antiretour (36) qui s'ouvre pour un écoulement de fluide depuis le conduit de sortie (120) vers le conduit d'entrée (110).

19. Détecteur de fuites conforme à l'une quelconque des revendications 1 à 18, comprenant un moyen (50) pour signaler des franchissements cycliques de la deuxième pression (P_{M}) par la pression différentielle sous la forme d'un signal discontinu, et un franchissement de la première pression (P_{C}) par la pression différentielle sous la forme d'un signal continu.

20. Détecteur de fuites conforme à l'une quelconque des revendications 1 à 19, comprenant un moyen (55, 51, 52) relié au moyen de transfert de fluide (3, 115-116) pour compter un franchissement de deuxième pression (P_{M}) chaque fois que la pression différentielle devient sensiblement supérieure à la deuxième pression et reste supérieure à celle-ci pendant au plus une durée prédéterminée (τ) et un moyen (53, 54) pour émettre une alarme lorsque la durée totale des franchissements de deuxième pression successifs comptés est sensiblement égale à une durée prédéterminée (SD).

## Patentansprüche

1. Lecksuchgerät, **dadurch gekennzeichnet, daß** es umfaßt
eine Verschlußvorrichtung (2), die zwischen einem Fluideinlaßkanal (110) und einem Fluidauslaßkanal (120) und in Öffnungsposition vorgesehen ist so, daß das Fluid in dem Einlaß- und Auslaßkanal einen Differenzdruck auf die Verschlußvorrichtung ausübt, der höher als ein erster Druck (P_{C}) ist,
ein Lecksuchmittel (23, 42), das im wesentlichen im Zentrum der Verschlußvorrichtung vorgesehen und zwischen dem Einlaß- und Auslaßkanal verschiebbar ist, wenn sich der Differenzdruck zwischen einem zweiten Druck (P_{M}), der kleiner als der erste Druck ist, und dem ersten Druck (P_{C}) ändert und die Verschlußvorrichtung in einer Schließposition bleibt, und
ein Fluidüberführungsmittel (3, 115-116), das durch das Lecksuchmittel betätigt wird, um Fluid vom Einlaßkanal (110) zum Auslaßkanal (120) durchzuführen, sobald der Differenzdruck im wesentlichen höher als der zweite Druck (P_{M}) wird.

2. Lecksuchgerät nach Anspruch 1, bei dem
die Verschlußvorrichtung (2) einen monolithischen Körper aus elastischem Material umfaßt, der einen Ringabschnitt (22) mit einer ersten Steifigkeit aufweist, damit der Ringabschnitt in der Schließposition hermetisch gegen einen Sitz (113) in Richtung des Einlaßkanals (110) aufgebracht wird so, daß der Differenzdruck kleiner als der erste Druck (P_{C}) ist, und
das Lecksuchmittel einen zentralen Abschnitt (23) der Verschlußvorrichtung im Zentrum des Ringabschnitts (22), mit einer zweiten Steifigkeit, die kleiner als die erste Steifigkeit ist, damit der zentrale Abschnitt sich verformt, wenn der Differenzdruck höher als der zweite Druck (P_{M}) wird, und einen Aufnehmer für Verschiebungen (42) umfaßt, der wenigstens teilweise durch den zentralen Abschnitt (23) gehalten ist und Verschiebungen des zentralen Abschnitts erfaßt, um das Fluidüberführungsmittel (3, 115-116) zu betätigen.

3. Lecksuchgerät nach Anspruch 2, indem der monolithische Körper der Verschlußvorrichtung (2) eine eine Dichtung (21; 21b) bildende Peripherie aufweist, die gegen die beiden Teile (11, 12; 14, 15) eines Körpers der Vorrichtung gedrückt ist.

4. Lecksuchgerät nach Anspruch 2 oder 3, in dem der Ringabschnitt (22, 22b) Fluiddurchführungsschlitze (222, 222b) umfaßt, die vorzugsweise eine Gesamtfläche im wesentlichen gleich dem Querschnitt des Einlaß- und Auslaßkanals (110, 120; 110a, 120a) aufweisen.

5. Lecksuchgerät nach Anspruch 1, in dem
die Verschlußvorrichtung (2a) einen monolithischen Körper aus elastischem Material umfaßt, der einen Ringabschnitt (22a) aufweist, der in der Schließposition gegen einen Sitz (113a) in Richtung des Einlaßkanals (110a) durch eine Druckfeder (153) hermetisch aufgebracht bleibt, die eine erste Steifigkeit aufweist so, daß der Differenzdruck kleiner als der erste Druck (P_{C}) ist, und
das Lecksuchmittel einen zentralen Abschnitt (23a) der Verschlußvorrichtung im Zentrum des Ringabschnitts (22a) mit einer zweiten Steifigkeit, die kleiner als die erste Steifigkeit ist, damit sich der zentrale Abschnitt verformt, wenn der Differenzdruck höher als der zweite Druck (P_{M}) wird, und einen Verschiebeaufnehmer (42a) enthält, der wenigsten teilweise durch den zentralen Abschnitt (23a) gehaltert ist und Verschiebungen des zentralen Abschnitts erfaßt, um das Fluidüberführungsmittel (3a, 115a-116a) zu betätigen.

6. Lecksuchgerät nach einem beliebigen der Ansprüche 2 bis 5, in dem der zentrale Abschnitt (23, 23a) der Verschlußvorrichtung (2, 2a) weniger dick als der Ringabschnitt (22, 22a) der Verschlußvorrichtung ist.

7. Lecksuchgerät nach einem beliebigen der Ansprüche 2 bis 6, in dem der zentrale Abschnitt (23, 23a) im wesentlichen eine konische Form, konvergierend zum Einlaßkanal (110, 110a) in einem Entleerungszustand, wenn der Differenzdruck kleiner als der zweite Druck (P_{M}) ist, und eine konische Form aufweist, die zum Außlaßkanal (120, 120a) konvergiert in einem Füllzustand, wenn der Differenzdruck deutlich höher als der zweite Druck (P_{M}) ist.

8. Lecksuchgerät nach einem beliebigen der Ansprüche 2 bis 7, in dem der Ringabschnitt (22) einen dicken radialen V-Abschnitt mit einer Spitze (221) aufweist, die mit dem Sitz (113) zusammenwirkt.

9. Lecksuchgerät nach Anspruch 1, in dem
die Verschlußvorrichtung einen ersten Ringkolben (22c; 22d), der mit Axialverschiebung im wesentlichen in dem Einlaß- und Auslaßkanal (110c, 120c; 110d, 120d) angebracht ist, und eine erste Feder (6c; 6d) mit einer ersten Steifigkeit umfaßt, damit der erste Kolben in der Schließposition hermetisch gegen einen Sitz (113c; 113d) in Richtung des Einlaßkanals (110c,; 110d) aufgebracht ist so, daß der Differenzdruck kleiner als der erste Druck (P_{C}) ist, und
das Lecksuchmittel einen zweiten Kolben (23c; 23d), der mit Verschiebung hermetisch in bezug auf den ersten Kolben (22c; 22d) angebracht ist, und eine zweite Feder (7c; 7d) mit einer zweiten Steifigkeit, die kleiner als die erste Steifigkeit ist, damit sich der zweite Kolben verschiebt, wenn der Differenzdruck höher als der zweite Druck (P_{M}) wird, und einen Verschiebeaufnehmer (42c; 42d) enthält, der wenigsten teilweise durch den zweiten Kolben (23c; 23d) gehaltert ist und Verschiebungen des zweiten Kolbens erfaßt, um das Fluidüberführungsmittel (3, 115c-116c; 3d, 115d-116d) zu betätigen.

10. Lecksuchgerät nach Anspruch 9, in dem der zweite Kolben (23c) mit Verschiebung im ersten Kolben (22c) angebracht ist, welcher die zweite Feder (7c) teilweise umgibt und teilweise von der ersten Feder (6c) umgeben ist.

11. Lecksuchgerät nach Anspruch 9, umfassend eine Führung (127c), in der der erste Kolben (22c) verstellbar angebracht ist, wobei die Führung am Auslaßkanal (120c) befestigt ist und Fluiddurchführungsschlitze (129c) enthält, die vorzugsweise eine Gesamtfläche im wesentlichen gleich dem Querschnitt des Einlaß- und Auslaßkanals (110c, 120c) aufweisen.

12. Lecksuchgerät nach Anspruch 9, in dem der erste Kolben (22d) verstellbar im zweiten Kolben (23d) angebracht ist, der teilweise von der zweiten und ersten Feder (7d, 6d) umgeben ist.

13. Lecksuchgerät nach einem beliebigen der Ansprüche 1 bis 12, in dem das Erfassungsmittel einen Magneten (42, 42a, 42c) der von einem verschiebbaren zentralen Abschnitt (23, 23a, 23c) der Verschlußvorrichtung gehaltert ist, und ein elektrisches Schaltschütz (41, 41a, 41c) enthält, das im Auslaßkanal (120, 120a, 120c) aufgehängt ist, um ein elektrisches Stromversorgungsmittel (35) mit dem Fluidüberführungsmittel (3, 115-116; 3a, 115a-116a; 3, 115c-116c) zu verbinden, wenn der Magnet nahe dem elektrischen Schaltschütz ist.

14. Lecksuchgerät nach Anspruch 13, in dem der Magnet (42, 42a, 42c) durch ein Metallstück ersetzt ist und das elektrische Schaltschütz (41, 41a, 41c) durch einen induktiven Näherungsschalter ersetzt ist.

15. Lecksuchgerät nach einem beliebigen der Ansprüche 1 bis 8, in dem das Erfassungsmittel eine Dehnungsmeßbrücke umfaßt, die durch einen zentralen deformierbaren Abschnitt (23, 23a) der Verschlußvorrichtung gehaltert ist, um ein Stromversorgungsmittel (35) mit dem Fluidüberführungsmittel (3, 115-116; 3a, 115a-116a) zu verbinden, wenn der Differenzdruck höher als der zweite Druck (P_{M}) ist.

16. Lecksuchgerät nach einem beliebigen der Ansprüche 1 bis 15, in dem das Fluidüberführungsmittel einen kalibrierten Umleitungskanal (115-116, 115a-116a) zwischen dem Einlaßkanal (110, 110a) und dem Auslaßkanal (120, 120a), der die Verschlußvorrichtung (2, 2a) umgibt, und ein Mittel (3, 3a) umfaßt, um den Umleitungskanal lediglich zu öffnen, wenn der Differenzdruck wenigstens höher als der zweite Druck (P_{M}) ist.

17. Lecksuchgerät nach Anspruch 16, in dem das Mittel zum Öffnen (3, 3a) ein Mittel umfaßt, um den Querschnitt des Umleitungskanals (115-116, 115a-116a) zur Veränderung zu bringen, um daß Überschreiten des Differenzdrucks durch den ersten Druck (P_{C}) anzuzeigen.

18. Lecksuchgerät nach Anspruch 16 oder 17, in dem das Fluidüberführungsmittel einen zweiten Umleitungskanal (37) umfaßt, der mit einer Rückschlagklappe (36) versehen ist, die sich für eine Fluidströmung vom Auslaßkanal (120) aus zum Einlaßkanal (110) hin öffnet.

19. Lecksuchgerät nach einem beliebigen der Ansprüche 1 bis 18, umfassend ein Mittel (50) zum Anzeigen zyklischer Überschreitungen des zweiten Drucks (P_{M}) durch den Differenzdruck in Form eines diskontinuierlichen Signals und ein Überschreiten des ersten Drucks (P_{C}) durch den Differenzdruck in Form eines kontinuierlichen Signals.

20. Lecksuchgerät nach einem beliebigen der Ansprüche 1 bis 19, umfassend ein Mittel (55, 51, 52), das mit dem Fluidüberführungsmittel (3, 115-116) verbunden ist, um ein Überschreiten des zweiten Drucks (P_{M}) jedesmal zu zählen, wenn der Differenzdruck im wesentlichen höher als der zweite Druck wird und höher als dieser während höhstens einer vorbestimmten Dauer (τ) bleibt, und ein Mittel (53, 54) zum Ausgeben eines Signals, wenn die Gesamtdauer der aufeinanderfolgenden gezählten Überschreitungen des zweiten Drucks im wesentlichen gleich einer vorbestimmten Dauer (SD) ist.

## Claims

1. A leak detector, **characterised in that** it comprises:
an obturator (2) disposed between a fluid inlet conduit (110) and a fluid outlet conduit (120) and in the open position while the fluid in the inlet and outlet conduits exerts a differential pressure on the obturator greater than a first pressure (P_{C}),
a leak detection means (23, 24) disposed substantially at the centre of the obturator and displaceable between the inlet and outlet conduits when the differential pressure varies between a second pressure (P_{M}) less than the first pressure and the first pressure (P_{C}) and the obturator remains in a closure position, and
a fluid transfer means (3, 115-116) controlled by the leak detection means for passing fluid from the inlet conduit (110) to the outlet conduit (120) as soon as the differential pressure becomes substantially greater than the second pressure (P_{M}).

2. A leak detector according to claim 1, wherein
the obturator (2) comprises a monolithic body of elastic material having an annular portion (22) with a first rigidity so that in the closure position the annular portion is applied hermetically against a seat (113) in the direction of the inlet conduit (110) while the differential pressure is less than the first pressure (P_{C}), and
the leak detection means comprises a central portion (23) of the obturator at the centre of the annular portion (22), with a second rigidity which is less than the first rigidity so that the central portion undergoes deformation when the differential pressure becomes greater than the second pressure (P_{M}), and a displacement sensor (42) supported at least partially by the central portion (23) and detecting displacements of the central portion in order to control the fluid transfer means (3, 115-116).

3. A leak detector according to claim 2, wherein the monolithic body of the obturator (2) has a periphery which forms a seal (21; 21b) clamped between two parts (11, 12; 14, 15) of a body of the device.

4. A leak detector according to claim 2 or 3, wherein the annular portion (22, 22b) comprises fluid passage slots (222, 222b), preferably having a total surface area substantially equal to the section of the inlet and outlet conduits (110, 120; 110a, 120a).

5. A leak detector according to claim 1, wherein
the obturator (2a) comprises a monolithic body of elastic material having an annular portion (22a) which in the closure position remains hermetically applied against a seat (113a) in the direction of the inlet conduit (110a) by a compression spring (153) having a first rigidity while the differential pressure is less than the first pressure (P_{C}), and
the leak detection means comprises a central portion (23a) of the obturator at the centre of the annular portion (22a), with a second rigidity which is less than the first rigidity so that the central portion undergoes deformation when the differential pressure becomes greater than the second pressure (P_{M}), and a displacement sensor (42a) supported at least partially by the central portion (23a) and detecting displacements of the central portion to control the fluid transfer means (3a, 115a-116a).

6. A leak detector according to any one of claims 2 to 5, wherein the central portion (23, 23a) of the obturator (2, 2a) is thinner than the annular portion (22, 22a) of the obturator.

7. A leak detector according to any one of claims 2 to 6, wherein the central portion (23, 23a) has substantially a conical shape converging towards the inlet conduit (110, 110a) in an unloaded state when the differential pressure is less than the second pressure (P_{M}) and a conical shape converging towards the outlet conduit (120, 120a) in a loaded state when the differential pressure is distinctly greater than the second pressure (P_{M}).

8. A leak detector according to any on of claims 2 to 7, wherein the annular portion (22) has a thick radial V-shaped section with an apex (221) cooperating with the seat (113).

9. A leak detector according to claim 1, wherein
the obturator comprises a first annular piston (22c, 22d) mounted for axial sliding substantially in the inlet and outlet conduits (110c, 120c; 110d, 120d), and a first spring (6c; 6d) with a first rigidity so that in the closure position the first piston is applied hermetically against a seat (113c; 113d) in the direction of the inlet conduit (110c; 110d) while the differential pressure is less than the first pressure (P_{C}), and
the leak detection means comprises a second piston (23c, 23d) mounted for hermetic sliding relatively to the first piston (22c; 22d) and a second spring (7c; 7d) with a second rigidity which is less than the first rigidity so that the second piston moves when the differential pressure becomes greater than the second pressure (P_{M}), and a displacement sensor (42c; 42d) supported at least partially by the second piston (23c, 23d) and detecting displacements of the second piston to control the fluid transfer means (3, 115c-116c; 3d, 115d-116d).

10. A leak detector according to claim 9, wherein the second piston (23c) is mounted for sliding in the first piston (22c), which partially surrounds the second spring (7c) and is partially surrounded by the first spring (6c).

11. A leak detector according to claim 9, comprising a guide (127c) in which the first piston (22c) is mounted for sliding, the guide being fixed to the outlet conduit (120c) and comprising fluid passage slots (129c), preferably having a total surface area substantially equal to the section of the inlet and outlet conduits (110c, 120c).

12. A leak detector according to claim 9, wherein the first piston (22d) is mounted for sliding in the second piston (23d), which is partially surrounded by the second and first springs (7d, 6d).

13. A leak detector according to any one of claims 1 to 12, wherein the detection means comprises a magnet (42, 42a, 42c) supported by a central displaceable portion (23, 23a, 23c) of the obturator and an electric switch contact (41, 41a, 41c) suspended in the outlet conduit (120, 120a, 120c) to connect an electric power supply means (35) to the fluid transfer means (3, 115-116; 3a, 115a-116a) when the magnet is close to the electric switch contact.

14. A leak detector according to claim 13, wherein the magnet (42, 42a, 42c) is replaced by a metal part and the electric switch contact (41, 41a, 41c) is replaced by an inductive proximity detector.

15. A leak detector according to any one of claims 1 to 8, wherein the detection means comprises a strain gauge bridge supported by a central deformable portion (23, 23a) of the obturator to connect an electric power supply means (35) to the fluid transfer means (3, 115-116; 3a, 115a-116a) when the differential pressure is greater than the second pressure (P_{M}).

16. A leak detector according to any one of claims 1 to 15, wherein the fluid transfer means comprises a calibrated bypass channel (115-116, 115a-116a) between the inlet conduit (110, 110a) and the outlet conduit (120, 120a) and bypassing the obturator (2, 2a) and a means (3, 3a) for opening the bypass channel only when the differential pressure is at least greater than the second pressure (P_{M}).

17. A leak detector according to claim 16, wherein the opening means (3, 3a) comprises a means for varying the section of the bypass channel (115-116, 115a-116a) in order to signal the crossing of the differential pressure by the first pressure (P_{C}).

18. A leak detector according to claim 16 or 17, wherein the fluid transfer means comprises a second bypass channel (37) provided with a non-return valve (36) which opens for a flow of fluid from the outlet conduit (120) to the inlet conduit (110).

19. A leak detector according to any one of claims 1 to 18, comprising a means (50) for signalling cyclic crossings of the second pressure (P_{M}) by the differential pressure in the form of a discontinuous signal, and a crossing of the first pressure (P_{C}) by the differential pressure in the form of a continuous signal.

20. A leak detector according to any one of claims 1 to 19, comprising a means (55, 51, 52) connected to the fluid transfer means (3, 115-116) to count a second pressure (P_{M}) crossing whenever the differential pressure becomes substantially greater than the second pressure and remains greater than said second pressure for a predetermined time (τ) at maximum and a means (53, 54) for emitting an alarm when the total duration of the counted successive second pressure crossings is substantially equal to a predetermined duration (SD).
